# EUROPÄISCHE PATENTSCHRIFT

(11) **EP 4 170 448 B1**
(45) Veröffentlichungstag und Bekanntmachung des Hinweises auf die Patenterteilung: **18.12.2024**
(21) Anmeldenummer: 22202476.2
(22) Anmeldetag: 19.10.2022
(51) Int. Cl.: G05B 23/02

(54) **PROZESSSIGNALREKONSTRUKTION UND ANOMALIE-DETEKTION BEI LASERBEARBEITUNGSPROZESSEN**
PROCESS SIGNAL RECONSTRUCTION AND ANOMALY DETECTION IN LASER MACHINING PROCESSES
RECONSTRUCTION DE SIGNAL DE PROCESSUS ET DÉTECTION D'ANOMALIE DANS DES PROCESSUS D'USINAGE AU LASER

(30) Priorität: 19.10.2021 DE 102021127016
(43) Veröffentlichungstag der Anmeldung: 26.04.2023
(73) Patentinhaber: Precitec GmbH & Co. KG, 76571 Gaggenau-Bad Rotenfels (DE)
(72) Erfinder: Krause, Martin, 76676 Graben-Neudorf (DE); Thill, Markus, 51643 Gummersbach (DE); Mack, Fabian, 76131 Karlsruhe (DE)
(74) Vertreter: Ter Meer Steinmeister & Partner

(56) Entgegenhaltungen:
- DE-A1- 102018 129 425
- DE-A1- 102018 129 441
- GÜNTHER JOHANNES ET AL: "Intelligent laser welding through representation, prediction, and control learning: An architecture with deep neural networks and reinforcement learning", MECHATRONICS, vol. 34, 31 December 2016 (2016-12-31), pages 1 - 11, XP029535343, ISSN: 0957-4158, DOI: 10.1016/J.MECHATRONICS.2015.09.004

## Beschreibung

Die vorliegende Erfindung betrifft ein Verfahren zum Überwachen eines Laserbearbeitungsprozesses an einem Werkstück, insbesondere an einem metallischen Werkstück, ein Laserbearbeitungsverfahren, ein System zum Überwachen eines Laserbearbeitungsprozesses, und ein Laserbearbeitungssystem zum Bearbeiten eines Werkstücks mittels Laserstrahl mit einem derartigen System.

### Hintergrund und Stand der Technik

Bei einem Laserbearbeitungsprozess wird ein Werkstück, insbesondere ein metallisches Werkstück, mittels eines Bearbeitungslasers bearbeitet. Die Bearbeitung kann beispielsweise ein Laserschneiden, -löten, -schweißen und/oder -abtragen umfassen. Das Laserbearbeitungssystem kann beispielsweise einen Laserbearbeitungskopf umfassen.

Laserbearbeitungsprozesse werden oft einer Qualitätskontrolle unterzogen. Insbesondere wird beim Laserschweißen oder -löten eines Werkstücks die Qualität des Bearbeitungsergebnisses, d.h. der entstandenen Verbindung, geprüft. Aktuelle Lösungen für die Prozessüberwachung und Qualitätsbeurteilung beim Laserschweißen umfassen für gewöhnlich ein Pre-, In- und Post-Prozess-Überwachungssystem. Das Pre-Prozess-System hat die Aufgabe, den Fügespalt zu detektieren, um den Laserstrahl auf die geeignete Position zu führen und den Versatz der Fügepartner zu ermitteln. In den meisten Fällen werden Triangulationssysteme dafür eingesetzt. Die In- und Post-Prozesssysteme werden eingesetzt, um den Prozess zu überwachen und die Qualität der entstandenen Verbindung zu sichern. In-Prozess-Systeme werden auch eingesetzt, um den Laserprozess zu steuern bzw. zu regeln.

Die Post-Prozess-Überwachung wird oft zur Qualitäts-überwachung verwendet, da dabei das aus dem Laserbearbeitungsprozess entstandene Bearbeitungsresultat, beispielsweise eine fertige und erkaltete Schweißnaht, untersucht und gemäß geltenden Normen (z.B. SEL100) vermessen werden kann. Die Post-Prozess-Überwachung bzw. Post-Inspektion erfordert einen großen anlagentechnischen Aufwand. Oftmals muss für die Post-Prozess-Überwachung eine gesonderte Messzelle aufgebaut werden. In-Prozess-Überwachungssysteme (auch genannt Inline- oder Online-Prozess-Überwachungssysteme) sind typischerweise dazu ausgelegt, zumindest einen Teil der Strahlung, welche von dem Laserbearbeitungsprozess emittiert wird, zu erfassen.

Unter der In-Prozess-Verarbeitung wird die Verarbeitung von Signalen, welche direkt beim Auftreffen des Lasers auf das zu bearbeitenden Werkstück entstehen, verstanden. Die Signale können mittels Photodioden, Zeilensensoren, Bildsensoren oder Multi- bzw. Hyperspektralsensoren aufgenommen werden. In jedem Fall wird elektromagnetische Strahlung, welche aus der Laserprozesszone emittiert wird, als eine Grundlage der Datenverarbeitung herangezogen. Die Daten können über einen bestimmten Wellenlängenbereich zeitlich mit Bildsensoren orts-aufgelöst und/oder mit Dioden nicht orts-aufgelöst integriert werden und/oder mit Spektrometern zeitlich frequenz-aufgelöst erfasst werden. Weitere Daten, wie etwa die Laserleistung im Bearbeitungskopf, können ebenfalls zu einer Datenverarbeitung herangezogen werden. Typischerweise hat eine solche Verarbeitung eine Beurteilung des Prozesses zum Ziel.

Typische Anomalie-Detektionsverfahren basierend auf Strahlungs-Intensitätsverläufen bilden aus vielen aufgenommenen Signalverläufen Referenzkurven. Um die Referenzkurven werden Hüllkurven gelegt. Über- oder unterschreitet ein Signal während des Prozesses eine Hüllkurve, wird mit zuvor festgelegten Fehlerkriterien ein Fehler ausgelöst. Kriterien können beispielsweise das Integral des Signals über der Hüllkurve oder die Häufigkeit des Überschreitens des Signals über die Hüllkurve sein. Dieser Ansatz basiert darauf, dass der Prozess immer gleich bleibt. Ein Lasermaterialbearbeitungsprozess bei wechselnden Bedingungen kann hiermit schwer überwacht werden. Zudem ist es aufwändig, nicht für die Qualität verantwortliche Signalveränderungen zu parametrieren.

In einem nachgelagerten Schritt kann die Qualität durch Sichtprüfungen oder mittels weiterer Messverfahren stichprobenartig durch einen Werker ermittelt werden. Da an eine Schweißnaht Forderungen der Materialwissenschaftler in Form von Messwerten gestellt werden, prüft ein Werker die Schweißnaht am Werkstück, indem er die geforderten physikalischen Größen, wie etwa die Festigkeit, ermittelt. Dabei wird das geschweißte Werkstück beispielsweise über einen Zugversuch einer Prüfung unterzogen und dabei die Zugkraft in Newton ermittelt, bei der die Schweißnaht reißt. Bei der Schweißung von Kontaktierungen wird beispielsweise die Leitfähigkeit in Siemens ermittelt, da eine bestimmte Leitfähigkeit des Schweißgefüges gefordert wird. Dieser nachgelagerte Schritt erhöht Taktzeiten und ist in der Regel teurer und aufwändiger als eine automatisierte In-Prozess-Überwachung und sollte daher möglichst vermieden werden. Die durch den Werker durch Sichtprüfungen oder mittels weiterer Messverfahren stichprobenartig ermittelten Qualitätsmerkmale können mittels diskretisierter oder kontinuierlicher Werte dokumentiert werden.

Zur In-Prozess-Qualitätsüberwachung wurde weiter ein Verfahren vorgeschlagen, das auf diesen dokumentierten Werten sowie auf lernenden Verfahren mit tiefen neuronalen Netzen basiert. Diese Verfahren erlernen einen möglichst generalisierten Zusammenhang zwischen den eingehenden Signalverläufen, Bildern und/oder Steuersignalen zu einem vorgegebenen Wert (einem gut interpretierbaren Qualitätsmerkmal). Bei kontinuierlichen Werten kommt ein Regressor und bei diskretisierten Werten ein Klassifikator zum Einsatz. Der erlernte Zusammenhang wird dann von der In-Prozess Überwachung prädiziert. Hierbei kann auch ein Prozess mit wechselnden Bedingungen überwacht werden, da der generalisierte Signalverlauf einem Qualitätsmerkmal zugeordnet wurde. Zudem ist es einfacher, nicht für die Qualität verantwortliche Signalveränderungen zu filtern.

EP 3 736 645 A1 beschreibt ein Verfahren zur automatisierten Steuerung von Material- oder Laserbearbeitungsprozessen. Das Verfahren wird in einem geschlossenen Regelkreis gesteuert durch eine Steuereinheit, die Korrekturausgangssignale berechnet und eine Energieerzeugungseinheit, eine Energieabgabeeinheit, eine Energieabgabeausgangsmessung, und eine Material-Energie-Wechselwirkungsmesseinheit zur Messung von tatsächlichen Bearbeitungsergebnissen steuert. Die tatsächlichen Bearbeitungsergebnisse werden der Steuereinheit zugeführt. Erzeugte Korrekturausgangssignale, die zu gewünschten Bearbeitungsergebnissen führen, werden über einen Steuereinheitsausgang der Energieerzeugungseinheit und der Energieabgabeeinheit zugeführt. Die Berechnung der Korrekturausgangssignale wird durch maschinelle Lernverfahren ausgeführt. Das Verfahren umfasst ein Speichern von Zeitreihen von Messungen, gewünschten Bearbeitungsergebnissen und Korrekturausgangssignalen in einem Speicher der Steuereinheit, ein Analysieren durch Vergleich der Zeitreihen der Korrekturausgangssignale und der Zeitreihen der Messungen in einer Beobachtungsuntereinheit basierend auf einer Technik des maschinellen Lernens, sowie ein Senden der Korrekturausgangssignale in Form von Produktionsbedingungen an die Energieabgabe-Steueruntereinheit und/oder die zweite Energieabgabe-Steueruntereinheit.

DE 10 2018 129 441 A1 betrifft die Überwachung eines Laserbearbeitungsprozesses mithilfe von tiefen faltenden neuronalen Netzen und beschreibt ein System zur Überwachung eines Laserbearbeitungsprozesses zur Bearbeitung eines Werkstücks, umfassend: eine Recheneinheit, die eingerichtet ist, basierend auf aktuellen Daten des Laserbearbeitungsprozesses einen Eingangstensor zu bestimmen und basierend auf dem Eingangstensor mittels einer Übertragungsfunktion einen Ausgangstensor zu bestimmen, der Informationen über ein aktuelles Bearbeitungsergebnis enthält, wobei die Übertragungsfunktion zwischen dem Eingangstensor und dem Ausgangstensor durch ein angelerntes neuronales Netz gebildet ist.

DE 10 2018 129 425 A1 beschreibt ein System zur Erkennung eines Bearbeitungsfehlers für ein Laserbearbeitungssystem zur Bearbeitung eines Werkstücks, wobei das System umfasst: eine Erfassungseinheit zum Erfassen von Bilddaten und Höhendaten einer bearbeiteten Werkstückoberfläche; und eine Recheneinheit, wobei die Recheneinheit eingerichtet ist, einem Eingangstensor, der auf den erfassten Bilddaten und Höhendaten basiert, zu bilden, und basierend auf dem Eingangstensor, mittels einer Übertragungsfunktion, einen Ausgangstensor zu bestimmen, der Informationen über einen Bearbeitungsfehler enthält.

Johannes Günther et. al., "Intelligent laser welding through representation, prediction, and control learning: An architecture with deep neural networks and reinforcement learning", Mechatronics, Bd. 34, 31. Dezember 2016, Seiten 1-11, XP029535343, ISSN: 0957-4158, DOI: 10.1016/J.MECHATRONICS.2015.09.004, beschreibt die Verwendung einer integrierten maschinellen Intelligenz in der Steuerung eines Laserschweißprozesses.

### Zusammenfassung der Erfindung

Bei einer Qualitätsüberwachung basierend auf lernenden Verfahren mit tiefen neuronalen Netzen können in der Regel nicht alle möglichen Fehlertypen für einen Prozess eintrainiert werden. Zudem möchte der Anwender in der Regel mit so wenigen Fehlerbeispielen wie möglich die Qualität überwachen. Das Verhalten eines Klassifikators oder Regressors bei unbekannten Fehlertypen oder Extrapolationen ist oft unvorhersehbar. Die Ergebnisse können stark von der erwarteten Prädiktion abweichen und zu Missinterpretationen führen. Große Extrapolationen können beispielsweise bei einer Regression dazu führen, dass krasse Ausreißer (Prozesse/Erzeugnisse, die eigentlich "nicht in Ordnung" wären) mit ähnlichem Wert bewertet werden wie tatsächliche Gutschweißungen (Prozesse/Erzeugnisse "in Ordnung"). Zudem ist das Ergebnis einer Regression oder Klassifikation mittels tiefer neuronaler Netze nur mit zusätzlichen Methoden, die in der Regel komplex in der Auswertung sind, erklärbar. Der Nutzer kann ohne die zusätzlichen Methoden nicht erkennen, wie die Entscheidung des Algorithmus zustande kam.

Es ist eine Aufgabe der Erfindung, ein Verfahren zum Überwachen eines Laserbearbeitungsprozesses mit einem neuronalen Netz bereitzustellen, das es gestattet, zu detektieren, wenn eine Anomalie des Laserbearbeitungsprozesses auftritt, und bei dem möglichst wenig Beispiele von fehlerhaften Bearbeitungen zum Anlernen des neuronalen Netzes erforderlich sind.

Es ist eine weitere Aufgabe der Erfindung, ein Verfahren zum Überwachen eines Laserbearbeitungsprozesses mit einem neuronalen Netz bereitzustellen, das es gestattet, ein Qualitätsmerkmal des Laserbearbeitungsprozesses zu bestimmen und zusätzlich die Plausibilität des bestimmten Qualitätsmerkmals zu prüfen. Dabei ist es wünschenswert, durch die Plausibilitätsprüfung eine zusätzliche Sicherheit für die Korrektheit der Bestimmung des Qualitätsmerkmals zu erreichen, auch wenn fehlerhafte Bearbeitungen oder Fehlertypen auftreten, die beim Anlernen des neuronalen Netzes nicht berücksichtigt wurden. Insbesondere ist es wünschenswert, dass möglichst wenig Beispiele von fehlerhaften Bearbeitungen zum Anlernen des neuronalen Netzes erforderlich sind.

Eine oder mehrere dieser Aufgaben wird durch die Merkmale der unabhängigen Ansprüche gelöst. Gemäß einem Aspekt der vorliegenden Offenbarung ist ein Verfahren zum Überwachen eines Laserbearbeitungsprozesses nach Anspruch 1 angegeben.

Dieser Aspekt kann eines oder mehrere der nachfolgend beschriebenen Merkmale umfassen.

Der Laserbearbeitungsprozess kann beispielsweise ein Laserschneiden, -löten, -schweißen und/oder - abtragen umfassen. Der Autoencoder wird insbesondere durch ein angelerntes (eingelerntes) tiefes neuronales Netz gebildet. Das neuronale Netz kann durch Fehlerrückführung bzw. Backpropagation angelernt sein. Hier und nachfolgend wird unter einem neuronalen Netz ein künstliches neuronales Netz verstanden.

Der Prozesssignaldatensatz kann auch als Sensordatensatz bezeichnet werden. Der rekonstruierte Prozesssignaldatensatz kann auch als rekonstruierter Sensordatensatz bezeichnet werden. Der in den Autoencoder eingegebene Prozesssignaldatensatz kann als Prozesssignal-Eingangsdatensatz bezeichnet werden. Der durch den Autoencoder erzeugte rekonstruierte Prozesssignaldatensatz kann als Prozesssignal-Ausgangsdatensatz bezeichnet werden.

Das Erzeugen eines rekonstruierten Prozesssignaldatensatzes durch den Autoencoder kann auch als Rekonstruieren eines Prozesssignaldatensatzes durch den Autoencoder bezeichnet werden. D.h., das Verfahren umfasst: Rekonstruieren des (eingegebenen) Prozesssignaldatensatzes durch Erzeugen eines rekonstruierten Prozesssignaldatensatzes durch den Autoencoder. Das Verfahren umfasst den Schritt: Erzeugen einer Kodierung durch den Autoencoder, basierend auf dem eingegebenen zumindest einen Prozesssignaldatensatz des Laserbearbeitungsprozesses. Das Erzeugen eines rekonstruierten Prozesssignaldatensatzes durch den Autoencoder erfolgt basierend auf der erzeugten Kodierung. Der Autoencoder umfasst einen Encoder und einen Decoder. Der zumindest eine Prozesssignaldatensatz des Laserbearbeitungsprozesses wird in den Encoder eingegeben. Der Encoder erzeugt basierend auf dem eingegebenen zumindest einen Prozesssignaldatensatz des Laserbearbeitungsprozesses eine Kodierung.

Der rekonstruierte Prozesssignaldatensatz wird durch den Decoder erzeugt. Der Decoder erzeugt aus der erzeugten Kodierung den rekonstruierten Prozesssignaldatensatz (einen Prozesssignaldatensatz rekonstruieren). Die Kodierung kann auch als latenter Merkmalsraum ("latent space"), komprimierte Abbildung oder Dimensionsreduktion bzw. Flaschenhals ("bottle neck") bezeichnet werden.

Der eingehende Prozesssignaldatensatz und der rekonstruierte Prozesssignaldatensatz können dieselbe Dimension und Größe (Anzahl der Komponenten je Dimension) haben. Sie können beispielsweise eine Dimension N mit jeweils kₙ Elementen haben, wobei N, kₙ natürliche Zahlen sind, mit n = 1, ..., N. Insbesondere kann der in den Autoencoder eingegebene Prozesssignaldatensatz (oder Prozesssignal-Eingangsdatensatz) in Form eines Tensors in den Autoencoder eingegeben werden, und der durch den Autoencoder erzeugte rekonstruierte Prozesssignaldatensatz (Prozesssignal-Ausgangsdatensatz) kann in Form eines Tensors erzeugt werden, wobei der eingegebene Prozesssignaldatensatz und der rekonstruierte Prozesssignaldatensatz Tensoren identischer Dimension und Größe sind. Somit findet zwar innerhalb des Autoencoders eine Dimensionsreduktion statt; der rekonstruierte Prozesssignaldatensatz hat jedoch wieder dieselbe Dimension und Größe wie der in den Autoencoder eingegebene Prozesssignaldatensatz. Der Ausdruck Tensor umfasst einen Vektor (1-dimensionaler Tensor). Der jeweilige Tensorraum, in dem der Prozesssignal-Eingangsdatensatz bzw. der Prozesssignal-Ausgangsdatensatz definiert sind, kann identisch sein. Das Erzeugen eines rekonstruierten Prozesssignaldatensatzes durch den Autoencoder kann somit insbesondere umfassen: Abbilden des Prozesssignal-Eingangsdatensatz als rekonstruierten Prozesssignal-Ausgangsdatensatz in Form eines Tensors mit identischer Dimension und Größe (identischer Tensorraum). Dies kann als Abbilden "auf sich selbst" bezeichnet werden. Der Autoencoder kann als Machine-Learning-Algorithmus-Autoencoder bezeichnet werden.

Mittels Dimensionsreduktion über einen tiefen Autoencoder können die Signale bzw. der Prozesssignaldatensatz rekonstruiert werden. Der Rekonstruktionsfehler kann entscheiden, ob eine Anomalie vorliegt bzw. ob ein Regressions- und/oder Klassifikationsergebnis valide ist. Eine Besonderheit ist, dass während des zu überwachenden Laserbearbeitungsprozesses und/oder danach eine Anomalie des Prozesses basierend auf dem bestimmten Rekonstruktionsfehler detektiert werden kann.

Die Verarbeitung der Prozesssignale (bzw. des Prozesssignaldatensatzes) mittels eines Autoencoders für die Anomalie-Detektion kann wie folgt beschrieben werden. In einer Ausführungsform führt der Autoencoder folgende Verarbeitung durch: Der Encoder, bestehend aus einem tiefen neuronalen Netz, extrahiert Merkmale eingehender Signale zu einer Kodierung. Diese Kodierung stellt auch gleichzeitig eine Dimensionsreduktion der eingehenden Prozesssignale da. Dies ermöglicht die Beschreibung der Prozesssignale in wenigen Dimensionen. Der Decoder, bestehend aus einem tiefen neuronalen Netz, rekonstruiert die Prozesssignale.

Die vorliegende Erfindung befasst sich also mit einer Anomalie-Detektion mittels tiefer neuronaler Netze sowie einer Plausibilitätsprüfung oder Verifizierung eines Regressions- und/oder Klassifikationsergebnisses bei der Überwachung eines Lasermaterialbearbeitungsprozesses, sowie die Qualitätsbeurteilung der Erzeugnisse. Der Erfindung liegt die Idee zu Grunde, aus der Verarbeitung eines Prozesssignaldatensatzes durch einen Autoencoders einen rekonstruierten Prozesssignaldatensatz zu gewinnen und zu untersuchen, ob der rekonstruierte Prozesssignaldatensatz zu dem ursprünglichen, in den Autoencoder eingegebenen Prozesssignaldatensatz passt. Ist dies der Fall, so kann davon ausgegangen werden, dass der Autoencoder die entscheidenden Merkmale des Prozesssignaldatensatzes in erwarteter Weise verarbeitet und der Laserbearbeitungsprozess somit dem entspricht, was bei der Erstellung bzw. dem Trainieren (Anlernen) des Autoencoders berücksichtigt wurde. Lässt jedoch der Rekonstruktionsfehler darauf schließen, dass der rekonstruierte Prozesssignaldatensatz nicht zu dem ursprünglichen, in den Autoencoder eingegebenen Prozesssignaldatensatz passt, so kann eine Anomalie des Laserbearbeitungsprozesses detektiert werden. Es kann dann darauf geschlossen werden, dass der Laserbearbeitungsprozess nicht dem entspricht, was bei der Erstellung bzw. dem Trainieren des Autoencoders berücksichtigt wurde.

Bei ausreichender Komprimierung der Daten kann der zumindest einem Prozesssignaldatensatz (d.h. das Eingangssignal) nur korrekt rekonstruiert werden, wenn der Autoencoder mit diesen Daten vorab eingelernt wurde. Beim Einlernen der Daten können die Gewichte des Autoencoders mittels Rückpropagierung in mehreren Epochen so lange angepasst werden, bis der Rekonstruktionsfehler minimal ist. Der Rekonstruktionsfehler kann hierbei die gemittelte absolute oder quadrierte Abweichung des Prozesssignaldatensatzes (also des Eingangssignals) zum rekonstruierten Prozesssignaldatensatz (d.h. rekonstruiertes Signal) sein. Der Rekonstruktionsfehler kann die entlang der Zeitachse aufsummierte bzw. integrierte vorzeichenbehaftete, absolute oder quadrierte Abweichung sein. Beispielsweise lernt der Autoencoder beim Trainieren mit mehreren Datensätzen, wiederkehrende Merkmale und Muster zu kodieren und diese wieder zu dekodieren. Für einen bekannten Laserbearbeitungsprozess können die gemessenen Prozesssignale mit einem gut eingelernten Autoencoder, bis auf ein Signalrauschen, perfekt rekonstruiert werden, auch wenn Schwankungen im Prozesssignal auftreten. Dabei werden nur die Schwankungen im Prozesssignal perfekt rekonstruiert, die auch in den eingelernten Signalen aufgetreten sind. Die Struktur des Autoencoders entscheidet hierbei, wie gut die Merkmale und Muster abstrahiert und generalisiert werden können. Treten Anomalien z.B. in Form von groben Unterschieden im Signalverlauf im Vergleich zu den vorher eingelernten Signalkurven auf, werden diese vom Autoencoder nicht korrekt rekonstruiert. Daher wird der Rekonstruktionsfehler für unbekannte Laserbearbeitungsprozesse, wie sie z.B. bei Qualitätsmängeln auftreten, deutlich größer als bei bekannten Laserbearbeitungsprozessen.

Das erfindungsgemäße Verfahren kann während der Durchführung des Laserbearbeitungs-prozesses kontinuierlich und/oder wiederholt durchgeführt werden.

Unter einem Prozesssignaldatensatz des Laserbearbeitungsprozesses ist ein Datensatz zumindest eines Prozesssignals des Laserbearbeitungsprozesses zu verstehen. Zum Laserbearbeitungsprozess können Prozesssignale gemessen bzw. erfasst werden. Ein Prozesssignaldatensatz kann beispielsweise eine Zeitreihe eines Prozesssignals umfassen, beispielsweise gemessene Intensitäten über ein Zeitintervall, und/oder kann einen gemessenen Prozessparameter des Laserbearbeitungsprozesses umfassen. Insbesondere in In-Prozess-Überwachungssystemen kann ein Prozesssignaldatensatz Rohdaten umfassen, um besonders schnell und effizient eine Analyse bzw. Bewertung in Realzeit vornehmen zu können.

Prozesssignale können beispielsweise mit einem oder mehreren Sensoren aufgenommen oder gemessen werden, beispielsweise mit wenigstens einem von wenigstens einer Photodiode, wenigstens einem Zeilensensor, wenigstens einem Bildsensor, wenigstens einer Kamera, wenigstens einem Triangulationssensor, wenigstens einem Sensor für optische Kohärenztomografie (englisch: optical coherence tomography, OCT), wenigstens einem akustischen Sensor und/oder wenigstens einem Multi- oder Hyperspektralsensor aufgenommen oder erfasst bzw. gemessen werden. Ein Prozesssignal des Laserbearbeitungsprozesses kann beispielsweise umfassen: Prozessstrahlung/-emission des Laserbearbeitungsprozesses, wie beispielsweise eine Temperaturstrahlung und/oder eine Plasmastrahlung, ein Bild von der Werkstückoberfläche eines Werkstücks, am Werkstück reflektierte Strahlungsintensität des Laserbearbeitungsprozesses, ein Prozesssignal vom Laserbearbeitungskopf, wie beispielsweise eine Streustrahlungsintensität von Streustrahlung innerhalb des Laserbearbeitungskopfes oder eine Temperatur eines Elements innerhalb des Laserbearbeitungskopfes. Ein Prozesssignal kann beispielsweise bei optischer Kohärenztomografie durch Einstrahlen von Messlicht und Erfassen des reflektierten Messlichts gemessen werden. Es kann auch elektromagnetische Strahlung, welche aus der Laserprozesszone emittiert wird, als Prozesssignal gemessen werden und als Prozesssignaldatensatz als Grundlage zum Überwachen eines Laserbearbeitungsprozesses dienen. Die elektromagnetische Strahlung kann beispielsweise Prozessemissionen wie z.B. eine Temperaturstrahlung, eine Plasmastrahlung und/oder eine reflektierte Laserstrahlung von einer Oberfläche eines Werkstücks umfassen. Die Prozesssignale können aber auch akustische Signale umfassen.

Prozesssignale können auch Steuersignale umfassen, die von einer Steuerung für den Laserbearbeitungsprozess verwendet werden, z.B. eine Laserleistung, eine Bearbeitungsgeschwindigkeit, etc..

Der Rekonstruktionsfehler beschreibt vorzugsweise eine Abweichung des zumindest einen rekonstruierten Prozesssignaldatensatzes von dem zumindest einen, in den Autoencoder eingegebenen Prozesssignaldatensatz. Der Rekonstruktionsfehler kann beispielsweise eine gemittelte absolute oder quadrierte Abweichung umfassen. Der Rekonstruktionsfehler kann über unterschiedliche Kriterien berechnet werden. Beispielsweise kann der Rekonstruktionsfehler bei sequenziellen Zeitreihen nur für bestimmte Signalbereiche herangezogen werden. Auch ist es möglich, den Rekonstruktionsfehler für einzelne Dimensionen (wenn diese beispielsweise nicht einheitlich normiert sind) separat zu betrachten und beispielsweise eine Kovarianzmatrix und einen Mittelwertvektor zu schätzen. Der Rekonstruktionsfehler kann beispielsweise basierend auf einer Metrik bestimmt werden. So können Metriken wie die Mahalanobis-Distanz als Maß für den Grad der Abnormität (bzw. als Maß für den Rekonstruktionsfehler) herangezogen werden. Zudem kann auch ein Rekonstruktionsfehler mittels FFT oder Wavelets (kontinuierlich CWT und/oder diskret DWT) zu unterschiedlichen Frequenzbereichen berechnet werden.

Das Verfahren kann umfassen: Bestimmen eines Abnormalitätsgrades, wobei das Detektieren einer Anomalie des Laserbearbeitungsprozesses basierend auf dem bestimmten Abnormalitätsgrad erfolgt. Das Bestimmen eines Abnormalitätsgrades kann insbesondere basierend auf einer gewichteten Summierung oder auf der Mahalanobis-Distanz bezogen auf einzelne Kennwerte zum Rekonstruktionsfehler erfolgen.

Das Verfahren kann umfassen: Bestimmen eines Abnormalitätsgrades, insbesondere basierend auf dem Rekonstruktionsfehler; und Detektieren einer Anomalie des Laserbearbeitungsprozesses basierend auf dem bestimmten Abnormalitätsgrad. Insbesondere kann der Schritt des Detektierens einer Anomalie des Laserbearbeitungsprozesses basierend auf dem bestimmten Rekonstruktionsfehler umfassen: Bestimmen eines Abnormalitätsgrades basierend auf dem Rekonstruktionsfehler; und Detektieren einer Anomalie des Laserbearbeitungsprozesses basierend auf dem bestimmten Abnormalitätsgrad.

Der Schritt des Bestimmens eines Rekonstruktionsfehlers kann umfassen: Ermitteln einer Mahalanobis-Distanz, insbesondere basierend auf dem zumindest einen Prozesssignaldatensatz und dem zumindest einen rekonstruierten Prozesssignaldatensatz.

Das Bestimmen eines Abnormalitätsgrades kann umfassen: Bestimmen eines Abnormalitätsgrades basierend auf der Mahalanobis-Distanz und/oder einer gewichteten Summe einzelner Kennwerte zum Rekonstruktionsfehler.

Das Bestimmen eines Abnormalitätsgrades kann umfassen: Ermitteln einer Mahalanobis-Distanz, insbesondere basierend auf dem zumindest einen Prozesssignaldatensatz und dem zumindest einen rekonstruierten Prozesssignaldatensatz.

Der Schritt der Ermittlung der Mahalanobis-Distanz kann erfolgen bezüglich:
- der Abweichung des zumindest einen Prozesssignaldatensatzes (Sensordatensatzes) von dem zumindest einen rekonstruierten Prozesssignaldatensatz (Sensordatensatz); und/oder
- einzelner Kennwerte zum Rekonstruktionsfehler; und/oder
- der Kodierung eines Prozesssignaldatensatzes (Sensordatensatzes).

Kennwerte zum Rekonstruktionsfehler können umfassen und/oder bezeichnet werden als Kennwerte zum Rekonstruktionsfehler/Kennwerte des Rekonstruktionsfehlers, Kennzahlen zum Rekonstruktionsfehler/des Rekonstruktionsfehlers, Parameter zum Rekonstruktionsfehler/des Rekonstruktionsfehlers, ein Feature oder Features zum Rekonstruktionsfehler/des Rekonstruktionsfehlers, und/oder eine Metrik zum Rekonstruktionsfehler/des Rekonstruktionsfehlers.

Das Verfahren kann umfassen oder der Schritt des Bestimmens eines Rekonstruktionsfehlers kann umfassen: Ermitteln der Parameter Mittelwert-Vektor und Kovarianz-Matrix der Mahalanobis-Distanz, insbesondere Ermitteln der Parameter Mittelwert-Vektor und Kovarianz-Matrix der Mahalanobis-Distanz mittels defektfreier oder gelabelter Datensätze.

Das Verfahren kann umfassen: Bestimmen eines Abnormalitätsgrades basierend auf der gewichteten Summierung und/oder auf der Mahalanobis-Distanz bezogen auf einzelne Kennwerte, insbesondere bezogen auf die einzelnen Kennwerte zum Rekonstruktionsfehler. Die gewichtete Summierung kann die entlang der Zeitachse aufsummierte bzw. integrierte vorzeichenbehaftete, absolute oder quadrierte Abweichung sein.

Das Verfahren kann umfassen: Setzen eines Grenzwertes, welcher anhand des Abnormalitätsgrades zwischen Normal und Anomalie unterscheidet. Es kann beispielsweise in dem Schritt des Detektierens einer Anomalie das Detektieren einer Anomalie des Laserbearbeitungsprozesses basierend darauf erfolgen, ob der Abnormalitätsgrad den Grenzwert erreicht und/oder überschreitet.

Das Detektieren einer Anomalie des Laserbearbeitungsprozesses basierend auf dem bestimmten Rekonstruktionsfehler kann auch bezeichnet werden als Detektieren, ob eine Anomalie des Laserbearbeitungsprozesses vorliegt, basierend auf dem bestimmten Rekonstruktionsfehler. Das Detektieren einer Anomalie des Laserbearbeitungsprozesses basierend auf dem bestimmten Rekonstruktionsfehler kann bedeuten oder umfassen, dass basierend auf dem bestimmten Rekonstruktionsfehler bestimmt wird, dass entweder eine Anomalie des Laserbearbeitungsprozesses vorliegt oder eine Anomalie des Laserbearbeitungsprozesses nicht vorliegt. Beispielsweise kann dabei ein für den Rekonstruktionsfehler oder dessen Maß herangezogenes Kriterium (Beurteilungskriterium) bestimmen oder definieren, ob eine Anomalie des Laserbearbeitungsprozesses vorliegt. Der Rekonstruktionsfehler entscheidet, ob es sich um eine Anomalie handelt. So kann beispielsweise das Detektieren einer Anomalie des Laserbearbeitungsprozesses umfassen: Detektieren einer Anomalie des Laserbearbeitungsprozesses basierend auf einem Maß des bestimmten Rekonstruktionsfehlers.

Das Detektieren einer Anomalie des Laserbearbeitungsprozesses kann beispielsweise umfassen: Detektieren/Erkennen, dass eine Anomalie des Laserbearbeitungsprozesses vorliegt, wenn der bestimmte Rekonstruktionsfehler ein Fehlerkriterium erfüllt, z.B. der Rekonstruktionsfehler einen Schwellwert überschreitet oder ein Maß des Rekonstruktionsfehlers einen Schwellwert überschreitet. Mit der Annahme, dass Information über den Laserbearbeitungsprozess im Prozesssignaldatensatz steckt, deutet ein kleiner Rekonstruktionsfehler daraufhin, dass der Autoencoder betreffende Merkmale des Laserbearbeitungsprozesses kodiert hat. Ist der Rekonstruktionsfehler jedoch im Verhältnis dazu groß, deutet dies wiederum auf eine Anomalie und damit auf vom Autoencoder nicht ausreichend erfasste Merkmale des Laserbearbeitungsprozesses hin.

Das Verfahren kann umfassen: Klassifizieren des zumindest einem Prozesssignaldatensatzes als Anomalie oder als Regelfall, basierend auf dem bestimmten Rekonstruktionsfehler. Beispielsweise kann ein Klassifizieren des zumindest einem Prozesssignaldatensatzes als Anomalie erfolgen, wenn das Vorliegen einer Anomalie des Laserbearbeitungsprozesses basierend auf dem bestimmten Rekonstruktionsfehler erkannt wird.

Das Verfahren kann umfassen: Klassifizieren des Laserbearbeitungsprozesses oder (insbesondere) eines Bearbeitungsergebnisses des Laserbearbeitungsprozesses als "in Ordnung" oder "nicht in Ordnung", basierend zumindest darauf, ob in dem Schritt des Detektierens einer Anomalie des Laserbearbeitungsprozesses eine Anomalie des Laserbearbeitungsprozesses erkannt wird. So kann beispielsweise in dem Fall, dass eine Anomalie des Laserbearbeitungsprozesses erkannt wird, der Laserbearbeitungsprozesses oder ein Erzeugnis des Laserbearbeitungsprozesses als "nicht in Ordnung" klassifiziert werden. Das Bearbeitungsergebnis kann beispielsweise ein Erzeugnis des Laserbearbeitungsprozesses sein. Das Klassifizieren des Laserbearbeitungsprozesses kann insbesondere das Klassifizieren eines Bearbeitungsergebnisses des Laserbearbeitungsprozesses umfassen.

Wird das Verfahren zur Qualitätsprüfung im Laserbearbeitungsprozess verwendet, deuten Anomalien auf einen Qualitätsmangel bzw. einen fehlerhaften Prozess hin, und das Erzeugnis wird als "nicht in Ordnung" klassifiziert, wenn der Rekonstruktionsfehler einen Schwellwert überschreitet. Der Autoencoder wird dann in der Regel ausschließlich mit Signalen (Prozesssignaldatensätzen) zu einem Laserbearbeitungsprozess eingelernt werden, dessen Erzeugnis bzw. Prozess als "in Ordnung" klassifiziert wurden.

Vorzugsweise umfasst das Verfahren: Messen von zumindest einem Teil der Prozesssignale des Prozesssignaldatensatzes, und/oder Übermitteln (oder Übertragen) von zumindest einem Teil der Prozesssignale des Prozesssignaldatensatzes von einer Steuerung.

Zumindest ein Teil der Prozesssignale kann beispielsweise mit einem oder mehreren Sensoren aufgenommen oder gemessen werden, wie weiter oben beschrieben. Die Steuerung kann insbesondere eine Steuerung sein, die den Laserbearbeitungsprozess steuert. Bei der Steuerung kann es sich beispielsweise um eine Steuerung eines Laserbearbeitungssystems zum Bearbeiten eines Werkstücks mittels Laserstrahl handeln. Von einer Steuerung übermittelte Prozesssignale können beispielsweise Steuersignale umfassen, z.B. eine vorgegebene Laserleistung, eine Soll-Fokuslage, eine Bearbeitungsgeschwindigkeit, usw.

Das Verfahren kann umfassen: Eingeben von einer oder mehreren Prozessbedingungen des Laserbearbeitungsprozesses in den Autoencoder. Prozessbedingungen können umfassen z.B. ein Werkstückmaterial, eine Bearbeitungskonfiguration, eine Schweißgeometrie (z.B. Überlappschwei-ßen, Stoßschweißen, etc).

Das Verfahren zum Überwachen eines Laserbearbeitungsprozesses kann beispielsweise ein Pre-Prozess-Überwachungsverfahren, ein In-Prozess-Überwachungsverfahren und/oder ein Post-Prozess-Überwachungsverfahren umfassen. Bei einem In-Prozess- Überwachungsverfahren kann ein Überwachen beim Bearbeiten des Werkstücks ermöglicht werden.

Insbesondere beim Laserschweißen oder -löten eines Werkstücks ist es wichtig, die Qualität der entstandenen Verbindung zu prüfen bzw. zu beurteilen und/oder zu sichern. Ein Ziel ist es, alle Defekte zuverlässig zu lokalisieren und zu erkennen.

In Ausführungsformen umfasst das Verfahren weiter die Schritte: Bestimmen eines Qualitätsmerkmals des Laserbearbeitungsprozesses; und Bewerten des Qualitätsmerkmals als valide, wenn im Schritt des Detektierens einer Anomalie des Laserbearbeitungsprozesses keine Anomalie detektiert wird; und Bewerten des bestimmten Qualitätsmerkmals als nicht valide, wenn im Schritt des Detektierens einer Anomalie des Laserbearbeitungsprozesses eine Anomalie detektiert wird.

Durch das Verfahren kann also eine Anwendung eines Anomalie-Detektors zur Verfügung gestellt werden, der vorzugsweise einen Autoencoder mit tiefem neuronalen Netz umfasst oder daraus besteht und der Prozesssignale (einen Prozesssignaldatensatz) rekonstruiert, wobei ein Rekonstruktionsfehler zur Bewertung herangezogen wird. Es erfolgt somit ein Validieren des Qualitätsmerkmals in Abhängigkeit davon, ob im Schritt des Detektierens einer Anomalie des Laserbearbeitungsprozesses keine Anomalie detektiert wird. Das Verfahren gestattet es somit, ein Qualitätsmerkmal des Laserbearbeitungsprozesses zu bestimmen und zusätzlich die Plausibilität des bestimmten Qualitätsmerkmals zu prüfen. Insbesondere können nicht nur anhand des Qualitätsmerkmals Fehler erkannt werden oder z.B. ein Bearbeitungsergebnis des Laserbearbeitungsprozesses als "nicht in Ordnung" klassifiziert werden, sondern es können darüber hinaus solche Fälle abgefangen werden, in denen eine Anomalie detektiert wird und somit das Qualitätsmerkmal als nicht valide anzusehen ist. Gerade auf dem Gebiet der Lasermaterialbearbeitung sind in der Regel nicht ausreichend Daten für eine Qualitätsüberwachung mit tiefen neuronalen Netzen verfügbar. Gerade bei der Lasermaterialbearbeitung ist es wünschenswert, eine Prozessüberwachung bei sich ändernden Prozessbedingungen zu gewährleisten. Für den Anwender ist es daher besonders vorteilhaft, dass auf diese Weise eine Qualitätsüberwachung mit möglichst wenig Beispielen von fehlerhaft bearbeiteten Materialien realisiert werden kann.

Das Qualitätsmerkmal kann insbesondere ein Prädizwert sein. Das Bestimmen eines Qualitätsmerkmals des Laserbearbeitungsprozesses kann ein Prädizieren des Qualitätsmerkmals des Laserbearbeitungsprozesses sein. Das Qualitätsmerkmal kann eine Prädiktion für eine Qualität des Laserbearbeitungsprozesses oder (inbesondere) des Bearbeitungsergebnisses des Laserbearbeitungsprozesses beschreiben. Es kann beispielsweise eine Bearbeitungsqualität bzw. etwaige Bearbeitungsfehler charakterisieren. Der Ausdruck "Prädiktion für eine Qualität des Laserbearbeitungsprozesses" kann insbesondere eine Prädiktion für eine Qualität des Bearbeitungsergebnisses des Laserbearbeitungsprozesses umfassen.

Hier sind insbesondere zwei Fälle zu nennen: Das Qualitätsmerkmal kann aus diskreten Werten oder aus kontinuierlichen Werten bestimmt werden. D.h. das Qualitätsmerkmal kann aus einem Wertebereich bestimmt werden, der diskrete (oder disktretisierte) Werte umfasst (beispielsweise diskrete Klassifizierungswerte), oder kann aus einem Wertebereich bestimmt werden, der einen kontinuierlichen Wertebereich umfasst.

Das Qualitätsmerkmal kann ein physikalisches Qualitätsmerkmal umfassen, beispielsweise eine Prädiktion für eine physikalische Größe (physikalische Eigenschaft, physikalischer Wert) des Laserbearbeitungsprozesses oder des Bearbeitungsergebnisses des Laserbearbeitungsprozesses. Hierzu kann das Qualitätsmerkmal insbesondere aus kontinuierlichen Werten bestimmt werden. Die physikalische Größe kann bei einem Laserschweißverfahren beispielsweise die Festigkeit/Zugfestigkeit einer Schweißnaht sein, die elektrische Leitfähigkeit des Schweißgefüges, oder die Glätte der Schweißnaht. Es kann beispielsweise während des laufenden Laserbearbeitungsprozesses mittels des bestimmten Qualitätsmerkmals Einfluss auf die Steuerungsparameter des Prozesses genommen werden. Somit kann der Laserbearbeitungsprozess gesteuert werden. Das Qualitätsmerkmal kann beispielsweise das bearbeitete Werkstück charakterisieren.

Das Qualitätsmerkmal kann beispielsweise eine Qualität des Laserbearbeitungsprozesses oder des Bearbeitungsergebnisses des Laserbearbeitungsprozesses klassifizieren. Daraus kann abgeleitet werden, ob der Bearbeitungsvorgang zu den gewünschten Kriterien des Bearbeitungsprozesses bzw. des Werkstücks führt, oder ob Bearbeitungsfehler auftreten. Hierzu kann das Qualitätsmerkmal insbesondere aus diskreten Werten bestimmt werden. Es kann beispielsweise eine Klassifikation als "in Ordnung"/"fehlerfrei" oder "nicht in Ordnung"/"fehlerhaft" erfolgen (d.h., ein Fehler liegt vor). Das Werkstück kann beispielsweise als "in Ordnung"/"gut" (d.h. geeignet für die Weiterverarbeitung oder den Verkauf) oder als "nicht in Ordnung"/"schlecht (d.h. als Ausschuss) gekennzeichnet bzw. klassifiziert werden. Das Qualitätsmerkmal kann beispielsweise eine Prädiktion umfassen, dass ein Fehler vorliegt. Bei einem Laserschweißverfahren kann beispielsweise das Qualitätsmerkmal eine Prädiktion umfassen, dass ein Spalt vorhanden ist. Das Ermitteln des mindestens einen Qualitätsmerkmals und insbesondere das Erkennen von Bearbeitungsfehlern kann automatisiert erfolgen und somit kann eine Prozessüberwachung, insbesondere eine Online- Prozessüberwachung ermöglicht werden.

Das Bestimmen eines Qualitätsmerkmals des Laserbearbeitungsprozesses kann erfolgen basierend auf dem zumindest einem Prozesssignaldatensatz des Laserbearbeitungsprozesses. Aus dem zumindest einem Prozesssignaldatensatz werden beispielsweise als Qualitätsmerkmal für die Qualität des Laserbearbeitungsprozesses signifikante Merkmale extrahiert oder berechnet. Diese können beispielsweise bei einem Laserschweißprozess oder Laserlötprozess die Qualität der Schweiß- und Lötnähte repräsentieren bzw. beschreiben.

Das Bestimmen eines Qualitätsmerkmals des Laserbearbeitungsprozesses kann ein Bestimmen eines Qualitätsmerkmals des Laserbearbeitungsprozesses durch einen Regressor oder einen Klassifikator, der durch ein (angelerntes) neuronales Netz gebildet ist, umfassen. Vorzugsweise kommt bei kontinuierlichen Werten ein Regressor und bei diskreten (z.B. diskretisierten) Werten ein Klassifikator zum Einsatz. Der Autoencoder und der Regressor bzw. Klassifikator können als getrennte Algorithmen ausgebildet sein. Der Autoencoder und der Regressor bzw. Klassifikator können parallel angeordnet sein. Der Autoencoder und der Regressor bzw. Klassifikator können den zumindest einen Prozesssignaldatensatz über eine gemeinsame Eingangsschicht empfangen. Alternativ kann der Regressor bzw. Klassifikator parallel zu einem Decoder des Autoencoders angeordnet sein. Hierbei kann der Regressor bzw. Klassifikator nach einem Encoder des Autoencoders angeordnet sein und die Kodierung von diesem empfangen (sogenannter erweiterter Autoencoder).

Das Bestimmen des Qualitätsmerkmals kann in Echtzeit ermittelt werden. Basierend darauf können Regelungsdaten und/oder Steuerungsdaten an ein den Laserbearbeitungsprozess durchführendes Laserbearbeitungssystem ausgegeben werden. Der Wert einer physikalischen Eigenschaft und/oder einer Klassifizierung kann also zur Regelung des Laserbearbeitungsprozesses verwendet werden, insbesondere, wenn der jeweilige Wert während der Durchführung des Laserbearbeitungsprozesses bestimmt wird. Eine Regelung des Laserbearbeitungsprozesses kann eine Anpassung einer Fokuslage, eines Fokusdurchmessers des Laserstrahls, einer Laserleistung und/oder eines Abstands eines Laserbearbeitungskopfes umfassen.

In Ausführungsformen des Verfahrens wird in dem Schritt des Bestimmens eines Qualitätsmerkmals des Laserbearbeitungsprozesses durch einen Regressor, der durch ein neuronales Netz gebildet ist, ein Wert für das Qualitätsmerkmal bestimmt; und/oder es wird in dem Schritt des Bestimmens eines Qualitätsmerkmals des Laserbearbeitungsprozesses durch einen Klassifikator, der durch ein neuronales Netz gebildet ist, ein Klassifizierungswert für das Qualitätsmerkmal bestimmt.

Es erfolgt somit ein Bewerten des durch den Regressor oder Klassifikator bestimmten Qualitätsmerkmals als valide oder nicht valide, je nachdem, ob im Schritt des Detektierens einer Anomalie des Laserbearbeitungsprozesses eine Anomalie detektiert wird. Somit kann eine Plausibilitätsprüfung von Regressor oder Klassifikator erfolgen. Der Regressor oder Klassifikator kann insbesondere durch ein tiefes neuronales Netz gebildet sein. Ein Klassifizierungswert kann auch auf Basis einer physikalischen Größe ermittelt werden.

Mit Hilfe der rekonstruierten Signale kann somit eine Plausibilitätsprüfung und Verifizierung des Regressors oder Klassifikators durchgeführt werden. Es kann die Validität der Prädiktion (d.h., des Qualitätsmerkmals) geprüft werden. Der Rekonstruktionsfehler entscheidet, ob es sich um eine Anomalie handelt bzw. ob das Regression- und/oder Klassifikationsergebnis valide ist. Es wird somit eine Regression und/oder Klassifikation zur Bestimmung eines Qualitätsmerkmals eines Laserbearbeitungsprozesses kombiniert mit einer Plausibilitätsprüfung und Anomalie-Detektion mit einem tiefen neuronalen Netz. Gerade bei der Lasermaterialbearbeitung sind in der Regel nicht ausreichend Daten für eine Qualitätsüberwachung mit tiefen neuronalen Netzen zur Regression und Klassifikation verfügbar. Für den Anwender ist es daher besonders vorteilhaft, dass auf diese Weise eine Qualitätsüberwachung mit möglichst wenig Beispielen von fehlerhaft bearbeiteten Materialien realisiert werden kann. Das Verhalten eines Klassifikators oder Regressors bei unbekannten Fehlertypen oder Extrapolationen ist oft unvorhersehbar. Solche Fälle können durch das Bewerten des bestimmten Qualitätsmerkmals als "nicht valide" abgefangen werden.

Die Anomalie-Detektion mittels Rekonstruktionsfehler kann den prädizierten Wert des Regressors oder Klassifikators (das Qualitätsmerkmal) maskieren. Ein Erzeugnis kann unabhängig vom prädizierten Wert als "nicht in Ordnung" klassifiziert werden, wenn eine Anomalie detektiert wird, beispielsweise wenn der Rekonstruktionsfehler einen Schwellwert überschreitet. Liegt der Rekonstruktionsfehler unterhalb des Schwellwertes, kann das Ergebnis vom prädizierten Wert des Regressors oder Klassifikators als valide angenommen werden. Auf diese Weise kann der Autoencoder auch mit Signalen zu einem Laserbearbeitungsprozess eingelernt werden, dessen Prozess/Erzeugnis als "nicht in Ordnung" klassifiziert wurden. Zudem ermöglicht der Regressor die Zuordnung zu einem physikalischen Qualitätsmerkmal bzw. der Klassifikator die Zuordnung zu einem diskreten Fehlerbild.

Vorzugsweise wird der Autoencoder zusammen mit dem Regressor und/oder Klassifikator mit bekannten Daten eingelernt. Der Autoencoder kann entweder als getrennter Algorithmus parallel zu dem Regressor oder Klassifikator oder als erweiterter Autoencoder, der den Regressor oder Klassifikator umfasst, als vereinter Algorithmus eingelernt werden. Das Einlernen des Autoencoders und des Regressors oder Klassifikators kann wie folgt erfolgen: Die Daten werden dafür mit einem diskreten oder kontinuierlichen Wert gelabelt. Dieser Wert stellt ein Qualitätsmerkmal dar. Bei einem erweiterten Autoencoder kann dann eine gemeinsame Kodierung erstellt werden, der wiederkehrende Merkmale und Muster repräsentiert. Für die Qualitätsüberwachung von Laserbearbeitungsprozessen kann dann, beispielsweise aus dieser Kodierung, mittels des Regressors oder Klassifikators das Qualitätsmerkmal prädiziert, parallel dazu oder gleichzeitig die Signale (der zumindest eine Prozesssignaldatensatz) über den Decoder rekonstruiert werden. Mit Hilfe der rekonstruierten Signale kann dann eine Plausibilitätsprüfung und Verifizierung des Regressors oder Klassifikators durchgeführt werden.

Unter der Annahme, dass die Information im Signalverlauf steckt, deutet ein kleiner Rekonstruktionsfehler darauf hin, dass das prädizierte Qualitätsmerkmal valide ist. Ist der Rekonstruktionsfehler jedoch im Verhältnis dazu groß, kann dies wiederum auf eine Anomalie und damit auf ein nicht valides prädiziertes Qualitätsmerkmal sowie einen Qualitätsmangel bzw. fehlerhaften Prozess hindeuten. Der Nutzer sieht, wenn bestimmte Signale oder Signalbereiche nicht gut vorhergesagt werden, und kann eine Überprüfung bzw. neues Einlernen des Algorithmus veranlassen.

Eine Anomalie kann wiederum mit weiteren Verfahren entweder durch Sichtprüfung des Werkers oder weitere Messverfahren überprüft und einem Qualitätsmerkmal zugeordnet werden. Im Fall der Plausibilitätsprüfung von Regressor oder Klassifikator können ein erweiterter Autoencoder bzw. Regressor oder Klassifikator mit dem Autoencoder mit diesem neuen gelabelten Datensatz zusätzlich eingelernt werden.

In Ausführungsformen weisen der Autoencoder und zumindest einer von dem Regressor und dem Klassifikator einen gemeinsamen Encoder auf; und/oder der Regressor und/oder der Klassifikator bestimmt das Qualitätsmerkmal basierend auf Daten von einem Encoder des Autoencoders.

Die Bestimmung des Qualitätsmerkmals basiert somit auf einer Verarbeitung des zumindest einem Prozesssignaldatensatzes durch den Encoder des Autoencoders bzw. den gemeinsamen Encoder. Zumindest einer von dem Regressor und dem Klassifikator kann basierend auf einem durch den Encoder erzeugte Kodierung bzw. Daten des Encoders das Qualitätsmerkmal bestimmen. Dadurch wird ein enger Zusammenhang zwischen dem bestimmten Qualitätsmerkmal und dem rekonstruierten Prozesssignaldatensatz hergestellt. Mit hoher Sicherheit wird daher durch die Detektion einer Anomalie erkannt, ob das bestimmte Qualitätsmerkmal valide ist. Der Encoder kann somit ein gemeinsamer Teil eines neuronalen Netzes sein, welches den Autoencoder und den zumindest einen von dem Regressor und dem Klassifikator umfasst. Vorteilhaft ist außerdem, dass der Regressor oder der Klassifikator dimensionsreduzierte Daten des Autoencoders verarbeiten können. Wenn der tiefe Autoencoder und zumindest einer von dem Regressor und dem Klassifikator einen gemeinsamen Encoder aufweisen, kann der Autoencoder auch ein erweiterter Autoencoder sein, der den zumindest einen von dem Regressor und dem Klassifikator umfasst, insbesondere ein erweiterter tiefer Autoencoder. Der erweiterte Autoencoder kann als vereinter Algorithmus, umfassend den Regressor und/oder Klassifikator, eingelernt werden.

In anderen Ausführungsformen sind der Autoencoder und zumindest einer von dem Regressor und dem Klassifikator parallel zueinander; und/oder der Regressor und/oder der Klassifikator bestimmt das Qualitätsmerkmal basierend auf dem zumindest einen Prozesssignaldatensatz; und/oder der Autoencoder und zumindest einer von dem Regressor und dem Klassifikator weisen eine gemeinsame Eingangsschicht auf.

Der Autoencoder und zumindest einer von dem Regressor und dem Klassifikator bilden in diesem Fall getrennte Algorithmen. Insbesondere können sie getrennte neuronale Netze umfassen, wobei das neuronale Netz des Autoencoder und das neuronale Netz des zumindest einen von dem Regressor und dem Klassifikator eine gemeinsame Eingangsschicht aufweisen können. Der Autoencoder kann als getrennter Algorithmus parallel zu dem Regressor und/oder dem Klassifikator eingelernt werden.

Vorzugsweise sind der Autoencoder und zumindest einer von dem Regressor und dem Klassifikator mit den gleichen Daten angelernt. Dadurch wird ein enger Zusammenhang zwischen dem bestimmten Qualitätsmerkmal und dem rekonstruierten Prozesssignaldatensatz hergestellt. Somit kann die Validierung des Qualitätsmerkmals durch den Schritt des Detektierens der Anomalie verbessert werden.

Der Schritt des Bestimmens eines Rekonstruktionsfehlers kann umfassen: Ermitteln einer Abweichung des zumindest einen Prozesssignaldatensatzes von dem zumindest einen rekonstruierten Prozesssignaldatensatz. Der Schritt des Bestimmens eines Rekonstruktionsfehlers kann umfassen: Ermitteln einer gemittelten absoluten oder quadrierten Abweichung des zumindest einen Prozesssignaldatensatzes von dem zumindest einen rekonstruierten Prozesssignaldatensatz, insbesondere Ermitteln einer entlang der Zeitachse aufsummierten vorzeichenbehafteten, absoluten oder quadrierten Abweichung.

Der Schritt des Bestimmens eines Rekonstruktionsfehlers kann umfassen: Filtern von zumindest einem Teil des Prozesssignaldatensatzes und/oder des rekonstruierten Prozesssignaldatensatzes; und darauf basierend Bestimmen des Rekonstruktionsfehlers.

Das Filtern kann beispielsweise ein Filtern zum Verringern eines Rauschens umfassen, beispielsweise ein Filtern durch ein Rauschfilter. Um den Einfluss von unsystematischem Signalrauschen zu minimieren, können die Signale zur Bildung des Rekonstruktionsfehlers gefiltert werden.

Der Rekonstruktionsfehler kann beispielsweise als die ermittelte Abweichung oder basierend auf der ermittelten Abweichung bestimmt werden. Die Abweichung kann dabei beispielsweise gemittelt, der Bildung des Absolutwerts unterzogen, und/oder quadriert werden. Der Rekonstruktionsfehler kann beispielsweise als eine gemittelte absolute oder quadrierte Abweichung bestimmt werden.

Das Verfahren kann umfassen: Normalisieren des Rekonstruktionsfehlers in Bezug auf den Prozesssignaldatensatz. Das Normalisieren des Rekonstruktionsfehlers mittels des Eingangssignalniveaus dient einer besseren Vergleichbarkeit des Rekonstruktionsfehlers und kann daher das Detektieren einer Anomalie vereinfachen.

Sowohl im Fall der Anomalie-Detektion als auch im Fall der Plausibilitätsprüfung von Regressor oder Klassifikator rekonstruiert ein Autoencoder die eingehenden Daten, d.h. den zumindest einem Prozesssignaldatensatz, und aus einer Differenz zwischen Eingangs- und Rekonstruktionssignal wird ein Rekonstruktionsfehler ermittelt. Sind aktuelle Messungen nicht eintrainiert, wird der Rekonstruktionsfehler groß. Ein großer Rekonstruktionsfehler deutet auf eine Anomalie hin, die wiederum einen Qualitätsmangel darstellen kann. Im Fall einer reinen Anomalie-Detektion kann der Autoencoder ausschließlich mit Trainingsdaten in Form von Signalen (bzw. entsprechenden Prozesssignaldatensätzen) zu Laserbearbeitungsprozessen eingelernt werden, deren Erzeugnis bzw. Prozess als "in Ordnung" oder "gut" klassifiziert wurden. Im Fall einer Plausibilitätsprüfung von Regressor oder Klassifikator kann der Autoencoder zusammen mit diesen und mit allen Eingangssignalen des Qualitätsüberwachungssystems der Laserbearbeitungsprozesse eingelernt werden, welche auch von diesen eingelernt wurden. Hierbei handelt es sich vorzugsweise im Wesentlichen um überprüfte und mit einem Qualitätsmerkmal versehene Beispiele. Im Fall einer Plausibilitätsprüfung von Regressor oder Klassifikator können insbesondere Trainingsdaten zu Laserbearbeitungsprozessen zum Einlernen verwendet werden, deren Erzeugnis bzw. Prozess als "in Ordnung" oder "gut" klassifiziert wurden, und Trainingsdaten zu Laserbearbeitungsprozessen, deren Erzeugnis bzw. Prozess als "nicht in Ordnung" oder "schlecht" klassifiziert wurden. Im Fall einer Plausibilitätsprüfung von Regressor oder Klassifikator kann der Autoencoder entweder als getrennter Algorithmus parallel oder als erweiterter Autoencoder als vereinter Algorithmus eingelernt werden. Im Fall einer Plausibilitätsprüfung von Regressor oder Klassifikator kann beispielsweise eine Anomalie überprüft, einem Qualitätsmerkmal zugeordnet und vom Regressor oder Klassifikator sowie Autoencoder bzw. erweiterten Autoencoder zusätzlich eingelernt werden.

In Ausführungsformen ist das neuronale Netz des Autoencoders und/oder des Regressors und/oder des Klassifikators anpassbar. Dies ermöglicht ein Transferlearning. Das angelernte neuronale Netz kann mittels Trainingsdaten durch Transfer-Learning anpassbar sein. Insbesondere kann das neuronale Netz an neue Prozesssignaldatensätze oder neue Laserbearbeitungsprozesse anpassbar sein, die beispielsweise neu mit einem Qualitätsmerkmal gelabelt wurden. Ein anpassbares neuronales Netz, das mittels Trainingsdaten durch Transfer-Learning (nach)trainiert werden kann, ist besonders flexibel, vielseitig einsetzbar und anwender-freundlich.

Mittels Transfer-Learning kann ein neuronales Netz nachtrainiert werden, beispielsweise wenn eine Anomalie detektiert wird. Das Messen einer physikalischen Größe bzw. das Klassifizieren durch Experten zum Vorgeben eines Qualitätsmerkmals kann anhand des bearbeiteten Werkstücks und gegebenenfalls mit zerstörenden Techniken erfolgen.

Die Verwendung eines trainierten neuronalen Netzes, das zum Transfer-Learning eingerichtet ist, hat also den Vorteil, dass das Verfahren schnell an geänderte Situationen, insbesondere an einen geänderten Laserbearbeitungsprozess, angepasst werden kann. Das Auftreten von Anomalien kann dadurch verringert werden. Beispielsweise kann für mehrere oder unterschiedliche Laserbearbeitungsprozesse ein valides Qualitätsmerkmal bestimmt werden.

Gemäß einem weiteren Aspekt der vorliegenden Offenbarung ist ein Laserbearbeitungsverfahren angegeben, das Laserbearbeitungsverfahren umfassend die Schritte: Bearbeiten eines Werkstücks mittels eines Laserstrahls; und Überwachen des Laserbearbeitungsprozesses gemäß dem Verfahren zum Überwachen eines Laserbearbeitungsprozesses.

Das Bearbeiten eines Werkstücks mittels des Laserstrahls kann auch als ein Durchführen des Laserbearbeitungsprozesses bezeichnet werden oder davon umfasst sein. Das Bearbeiten eines Werkstücks mittels des Laserstrahls kann beispielsweise Laserschneiden, -löten, -schweißen und/oder -abtragen umfassen.

Das Laserbearbeitungsverfahren kann weiter umfassen: Messen von Prozesssignalen des Laserbearbeitungsprozesses, und/oder Übermitteln von Prozesssignalen von einer Steuerung; wobei das Überwachen des Laserbearbeitungsprozesses umfasst: Eingeben von zumindest einem Prozesssignaldatensatz des Laserbearbeitungsprozesses in den Autoencoder, wobei der Prozesssignaldatensatz die gemessenen Prozesssignale und/oder die von einer Steuerung übermittelten Prozesssignale umfasst.

Gemäß einem weiteren Aspekt der vorliegenden Offenbarung ist ein System zum Überwachen eines Laserbearbeitungsprozesses angegeben, wobei das System umfasst: mindestens eine Sensoreinheit, die dazu eingerichtet ist, Prozesssignale des Laserbearbeitungsprozesses zu messen; mindestens einen Autoencoder, der durch ein tiefes neuronales Netz gebildet ist; und mindestens eine Recheneinheit, die dazu eingerichtet ist, das Verfahren zum Überwachen des Laserbearbeitungsprozesses auszuführen. Dabei wird zumindest ein Prozesssignaldatensatz der Prozesssignale des Laserbearbeitungsprozesses in den Autoencoder eingegeben.

Gemäß einem weiteren Aspekt der vorliegenden Offenbarung ist ein Laserbearbeitungssystem zur Bearbeitung eines Werkstücks mittels eines Bearbeitungslaserstrahls angegeben, wobei das Laserbearbeitungssystem umfasst: einen Laserbearbeitungskopf zum Einstrahlen des Bearbeitungslaserstrahls auf das Werkstück; und das System zum Überwachen eines Laserbearbeitungsprozesses. Das Laserbearbeitungssystem kann dazu eingerichtet sein, das beschriebene Laserbearbeitungsverfahren durchzuführen. Die Recheneinheit kann dazu ausgelegt sein, den Laserbearbeitungsprozess auf Basis von Regelungsdaten und/oder Steuerungsdaten zu regeln und/oder zu steuern.

Das System und des Laserbearbeitungssystem zur Bearbeitung eines Werkstücks können ebenfalls alle Vorteile verwirklichen, die auch für das Verfahren und insbesondere eines der Ausführungsformen des Verfahrens zutreffen.

### Kurzbeschreibung der Zeichnungen

Ausführungsformen der vorliegenden Erfindung werden im Folgenden anhand von Figuren im Detail beschrieben. Die Figuren bilden verschiedene Merkmale von Ausführungsformen ab, wobei die Merkmale nicht auf die Ausführungsformen allein beschränkt sind. Vielmehr lassen sich alle Merkmale, die sich nicht gegenseitig ausschließen auch miteinander kombi-nieren oder es lassen sich Merkmale aus Ausführungsformen entfernen, sofern sie nicht wesentlich für die Ausführung der Erfindung sind.
Fig. 1 zeigt eine schematische Darstellung eines Laserbearbeitungssystems zur Bearbeitung eines Werkstücks mittels eines Laserstrahls und eines Systems zum Überwachen eines Laserbearbeitungsprozesses gemäß einer Ausführungsform;
Fig. 2 zeigt eine schematische Darstellung eines tiefen Autoencoders zum Verarbeiten von Prozesssignaldatensätzen des Laserbearbeitungsprozesses gemäß einer Ausführungsform;
Fig. 3 zeigt schematisch einen Prozesssignaldatensatz und einen rekonstruierten Prozesssignaldatensatz;
Fig. 4 zeigt schematisch einen Prozesssignaldatensatz und einen rekonstruierten Prozesssignaldatensatz im Falle einer Anomalie des Laserbearbeitungsprozesses;
Fig. 5 zeigt eine schematische Darstellung eines tiefen Autoencoders parallel zu einem Regressor oder Klassifikator gemäß einer Ausführungsform;
Fig. 6 zeigt eine schematische Darstellung eines erweiterten tiefen Autoencoders zusammen mit einem Regressor oder Klassifikator gemäß einer Ausführungsform; und
Fig. 7 zeigt eine schematische Darstellung eines Verfahrens zum Überwachen eines Laserbearbeitungsprozesses gemäß einer Ausführungsform.

### Detaillierte Beschreibung von Ausführungsbeispielen

Im Folgenden werden, sofern nicht anders vermerkt, für gleiche und gleichwirkende Elemente gleiche Bezugszeichen verwendet.

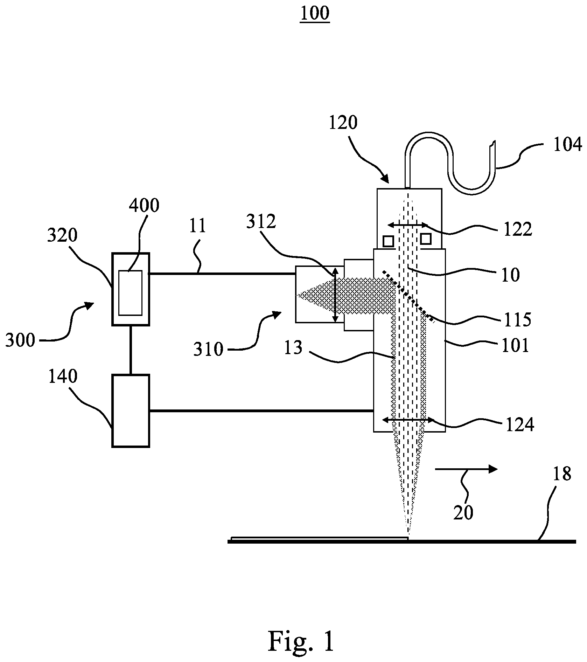

Figur 1 zeigt eine schematische Darstellung eines Laserbearbeitungssystems 100 zur Bearbeitung eines Werkstücks mittels eines Laserstrahls 10 gemäß Ausführungsformen der vorliegenden Offenbarung. Das Laserbearbeitungssystem 100 umfasst einen Laserbearbeitungskopf 101, insbesondere einen Laserschneid-, Laserlöt- oder Laserschweißkopf, und ein System 300 zum Überwachen des Laserbearbeitungsprozesses mit einer Sensoreinheit 310 als Beispiel für einen Laserbearbeitungskopf gemäß einer Ausführungsform. Das System 300 zum Überwachen des Laserbearbeitungsprozesses umfasst weiter eine Recheneinheit 320.

Der Laserstrahl 10 wird beispielsweise über eine Lichtleitfaser 104 von einer Laserquelle (nicht gezeigt) zugeführt. Der Strahlengang des (Bearbeitungs-)laserstrahls 10 verläuft über eine Kollimationsoptik 122 und eine Fokussieroptik 124 auf ein Werkstück 18, welches bearbeitet wird.

Das Laserbearbeitungssystem 100 oder Teile davon, wie beispielsweise der Bearbeitungs-kopf 101, kann gemäß Ausführungsformen relativ zu dem Werkstück 18 entlang einer Bearbeitungsrichtung 20 bewegbar sein. Die Bearbeitungsrichtung 20 kann eine Schneid-, Löt- oder Schweißrichtung und/oder eine Bewegungsrichtung des Laserbearbeitungssystems 100, wie beispielsweise des Bearbeitungskopfes 101, bezüglich des Werkstücks 18 sein. Insbesondere kann die Bearbeitungsrichtung 20 eine horizontale Richtung sein.

Das Laserbearbeitungssystem 100 wird von einer Steuereinheit 140 gesteuert, die dazu ein-gerichtet ist, den Bearbeitungskopf 101 zu steuern.

Bei der Bearbeitung entstehen Prozessemissionen 13, beispielsweise Temperaturstrahlung, Plasmastrahlung und/oder eine von einer Oberfläche eines Werkstücks reflektierte Laser-strahlung. Ein Teil der Prozessemissionen 13 wird zumindest teilweise koaxial bzw. kollinear zu dem Strahlengang des Bearbeitungsstrahls 10 von der Oberfläche des Werkstücks über einen Strahlteiler 115 und eine Kollimator-Optik 312 zu der Sensoreinheit 310 geführt.

Die Recheneinheit 320 umfasst ein tiefes ein neuronales Netz in Form eines tiefen Autoencoders 400 und erhält von der Sensoreinheit 310 Prozesssignale 11, die in Form von Prozesssignaldatensätzen 30 in das neuronale Netz 400 eingegeben werden.

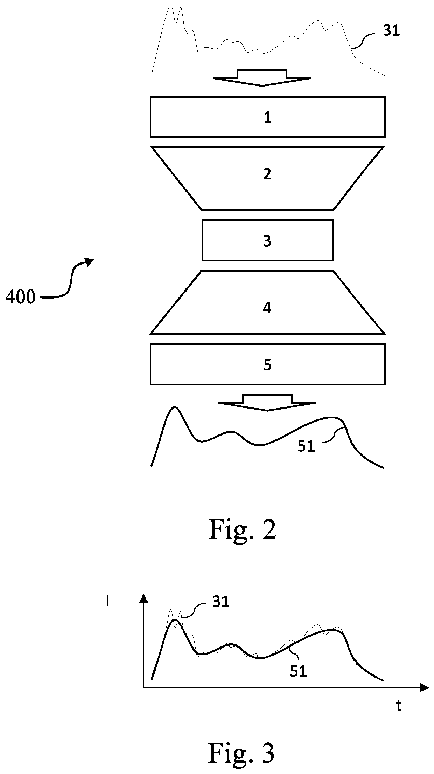

Fig. 2 zeigt eine schematische Darstellung des tiefen Autoencoders 400 zum Verarbeiten von Prozesssignaldatensätzen 31 der Prozesssignale 11 des Laserbearbeitungsprozesses. Der Autoencoder 400 umfasst eine Eingangsschicht 1, einen Encoder 2, eine Kodierungsschicht 3, einen Decoder 4 und eine Ausgabeschicht 5. Die Kodierungsschicht 3 ist eine gemeinsame Schicht des Encoders 2 und des Decoders 4.

Der Autoencoder 400 führt folgende Verarbeitung durch: In die Eingangsschicht 1 wird zumindest ein Prozesssignaldatensatz 31 eines Prozesssignals 11 eingegeben. Der Encoder 2, bestehend aus einem tiefen neuronalen Netz, extrahiert Merkmale eingehender Signale 11 zu einer Kodierung in einer Kodierungsschicht 3. Diese Kodierung stellt auch gleichzeitig eine Dimensionsreduktion der eingehenden Prozesssignale 11 dar. Dies ermöglicht die Beschreibung der Prozesssignale 11 in wenigen Dimensionen. Der Decoder 4, bestehend aus einem tiefen neuronalen Netz, rekonstruiert die Prozesssignale. Ein rekonstruierter Prozesssignaldatensatz 51 des rekonstruierten Signals wird an der Ausgabeschicht 5 ausgegeben.

Fig. 3 zeigt schematisch einen Prozesssignaldatensatz 31 und einen dazugehörigen rekonstruierten Prozesssignaldatensatz 51, beispielhaft als Verlauf einer Signalintensität I über der Zeit t. Bis auf ein Signalrauschen werden Schwankungen im Prozesssignal 11 quasi perfekt rekonstruiert, die auch in den in den Autoencoder 400 eingelernten Signalen aufgetreten sind.

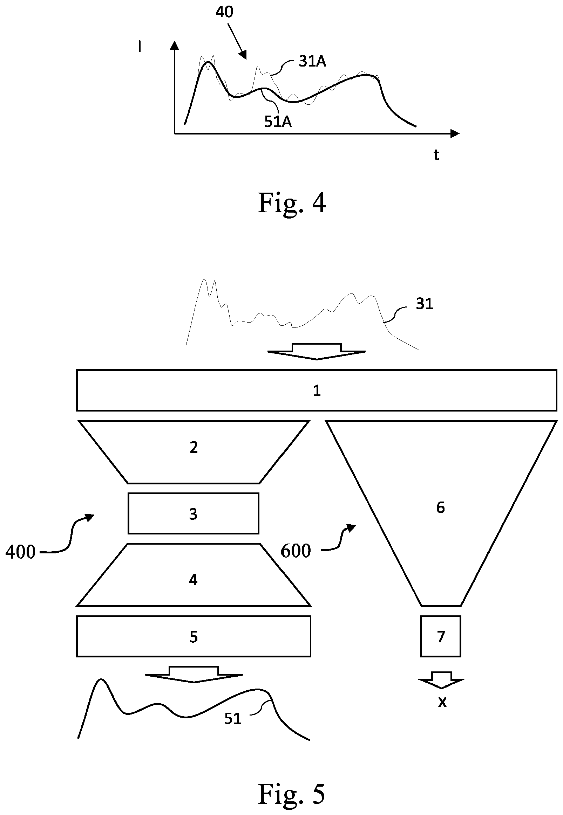

Fig. 4 zeigt schematisch einen Prozesssignaldatensatz 31A und einen dazugehörigen rekonstruierten Prozesssignaldatensatz 51A im Falle des Auftretens einer Anomalie 40 des Laserbearbeitungsprozesses. Treten Anomalien 40 in Form von groben Unterschieden im Signalverlauf im Vergleich zu den vorher eingelernten Signalkurven auf, werden diese vom Autoencoder 400 nicht korrekt rekonstruiert.

Die Recheneinheit 320 bestimmt einen Rekonstruktionsfehler als gemittelte absolute oder quadrierte Abweichung des Eingangssignals 11 bzw. Prozesssignaldatensatzes 31/31A zum rekonstruierten Signal bzw. rekonstruierten Prozesssignaldatensatz 51/51A.

Wenn der Rekonstruktionsfehler einen Schwellwert überschreitet, erkennt die Recheneinheit 320 das Vorliegen einer Anomalie 40. Wird das Verfahren direkt zur Qualitätsprüfung im Laserbearbeitungsprozess verwendet, deuten die Anomalien 40 auf einen Qualitätsmangel bzw. fehlerhaften Prozess hin, und das Erzeugnis wird von der Recheneinheit 320 als "nicht in Ordnung" klassifiziert, wenn eine Anomalie 40 erkannt wurde, d.h. wenn der Rekonstruktionsfehler einen Schwellwert überschreitet.

Ein Teil der Prozesssignale des Prozesssignaldatensatzes 31 kann auch von der Steuereinheit 140 übermittelt werden. Von der Steuereinheit 140 übermittelte Prozesssignale können beispielsweise Steuersignale umfassen, z.B. eine vorgegebene Laserleistung, eine Soll-Fokuslage, eine Bearbeitungsgeschwindigkeit, usw. Entsprechende rekonstruierte Prozesssignale sind dann Teil der rekonstruierten Prozesssignale des rekonstruierten Prozesssignaldatensatzes 51.

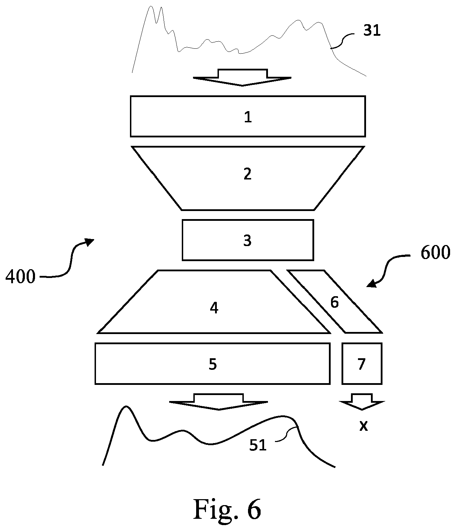

Fig. 5 und Fig. 6 zeigen schematische Darstellungen des tiefen Autoencoders 400 zusammen mit einem Regressor 600 oder Klassifikator 600 zur Prädiktion eines Qualitätsmerkmals x des Laserbearbeitungsprozesses. Bei der Qualitätsüberwachung des Laserbearbeitungsprozesses wird das Qualitätsmerkmals x des Laserbearbeitungsprozesses prädiziert, das Qualitätsmerkmal x wird als valide bewertet, wenn keine Anomalie 40 detektiert wird, und das Qualitätsmerkmal x wird als nicht valide bewertet, wenn eine Anomalie 40 detektiert wird.

Der Autoencoder 400 wird zusammen mit dem Regressor 600 oder Klassifikator 600 mit bekannten Daten eingelernt. Die Daten sind dafür mit einem diskreten oder kontinuierlichen Wert gelabelt, der das Qualitätsmerkmal x darstellt. Der Regressor 600 oder Klassifikator 600 ist als tiefes neuronales Netz 6 mit einer Ausgabeschicht 7 in der Recheneinheit 320 implementiert.

Fig. 5 zeigt eine schematische Darstellung eines tiefen Autoencoders 400 parallel zu einem Regressor 600 oder Klassifikator 600.

Für die Qualitätsüberwachung von Laserbearbeitungsprozessen wird zumindest ein Prozessdatensatz 31 in die gemeinsame Eingangsschicht 1 des Autoencoders 400 und des Regressors 600 oder Klassifikators 600 eingegeben. Daraus wird mittels des tiefen neuronalen Netzes 6 des Regressors 600 oder Klassifikators 600 das Qualitätsmerkmal x prädiziert, und gleichzeitig werden die Prozesssignale als Prozesssignaldatensatz 51 über den Autoencoder 400 rekonstruiert.

Fig. 6 zeigt eine schematische Darstellung eines erweiterten tiefen Autoencoders 400, der einen Regressor oder Klassifikator 600 umfasst.

Durch den erweiterten Autoencoder 400 wird eine gemeinsame Kodierung in der Kodierungsschicht 3 erstellt, der wiederkehrende Merkmale und Muster repräsentiert. Für die Qualitätsüberwachung von Laserbearbeitungsprozessen wird aus der Kodierung der Kodierungsschicht 3, mittels des tiefen neuronalen Netzes 6 des Regressors 600 oder Klassifikators 600, das Qualitätsmerkmal x prädiziert, und es werden gleichzeitig aus der Kodierung der Kodierungsschicht 3 die Prozesssignale als Prozesssignaldatensatz 51 über den Decoder 4 rekonstruiert.

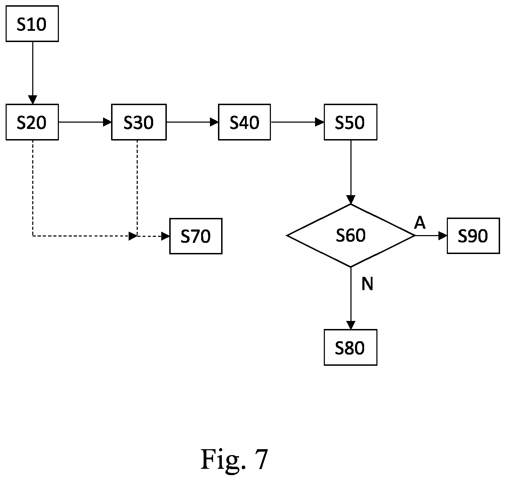

Fig. 7 zeigt eine schematische Darstellung eines beispielhaften Verfahrens zum Überwachen eines Laserbearbeitungsprozesses, wie es beispielsweise durch das System 300 entsprechend Fig. 4 oder Fig. 5 ausgeführt werden kann.

Das Verfahren umfasst folgende Schritte:
Schritt S10: Messen von zumindest einem Teil der Prozesssignale des Prozesssignaldatensatzes 31, und/oder Übermitteln von zumindest einem Teil der Prozesssignale des Prozesssignaldatensatzes 31 von der Steuerung 140;
Schritt S20: Eingeben des Prozesssignaldatensatzes 31 des Laserbearbeitungsprozesses in den Autoencoder 400;
Schritt S30: Erzeugen einer Kodierung durch den Encoder 2;
Schritt S40: Erzeugen eines rekonstruierten Prozesssignaldatensatzes 51 durch den Autoencoder 400; Schritt S50: Bestimmen eines Rekonstruktionsfehlers durch die Recheneinheit 320;
Schritt S60: Detektieren einer Anomalie des Laserbearbeitungsprozesses basierend auf dem bestimmten Rekonstruktionsfehler, durch die Recheneinheit 320;
Schritt S70: Bestimmen eines Wertes eines Qualitätsmerkmals des Laserbearbeitungsprozesses, beispielsweise durch den Regressor 600 oder Klassifikator 600;
Schritt S80: Bewerten des Qualitätsmerkmals als valide, wenn in Schritt S60 keine Anomalie detektiert wird (Fall N); und
Schritt S90: Bewerten des Qualitätsmerkmals als nicht valide, wenn in Schritt S60 eine Anomalie detektiert wird (Fall A).

Wie zu Ausführungsbeispielen beschrieben, wird eine Plausibilitätsprüfung und Anomalie-Detektion in Kombination mit tiefen neuronalen Netzen zur Regression und Klassifikation in der Lasermaterialbearbeitung durch einen erweiterten Autoencoder ermöglicht. Auf Basis des Autoencoders können die Signale rekonstruiert und ein Rekonstruktionsfehler berechnet werden. Der Rekonstruktionsfehler kann sowohl zur Bewertung der Qualität des Laserbearbeitungsprozesses als auch zur Überprüfung der Validität der Prädiktion des Regressors oder Klassifikators herangezogen werden.

Der initiale Aufwand bei der Erzeugung von Fehlerbeispielen in der Lasermaterialbearbeitung zum Einlernen von Qualitätsüberwachungssystemen basierend auf einem Regressor oder Klassifikator kann somit deutlich reduziert werden, da deren Verfügungsraum gemäß den bekannten Fehlerbeispielen begrenzt werden kann. Der Anwender kann mit wenigen Fehlerbeispielen und einigen Gutbeispielen die Qualität überwachen. Die Vorhersagegenauigkeit zur Güte des Prozesses und des Erzeugnisses kann im laufenden Produktionsprozess gesteigert werden, indem Anomalien vom Werker analysiert, mit einem Qualitätsmerkmal versehen und vom vorgeschlagenen Algorithmus oder der Methode, d.h. vom Autoencoder und ggf. dem Regressor und/oder Klassifikator neu eingelernt werden.

## Patentansprüche

1. Verfahren zum Überwachen eines Laserbearbeitungsprozesses, das Verfahren umfassend die Schritte:
- Eingeben (S20) von zumindest einem Prozesssignaldatensatz (31) des Laserbearbeitungsprozesses in einen Autoencoder (400);
- Rekonstruieren des eingegebenen Prozesssignaldatensatzes (31) durch den Autoencoder (400), umfassend:
Erzeugen einer Kodierung (3) durch einen Encoder (2) des Autoencoders (500) basierend auf dem zumindest einen Prozesssignaldatensatz (31), wobei das Erzeugen der Kodierung eine Dimensionsreduktion des zumindest einen Prozesssignaldatensatzes (31) umfasst,
Erzeugen eines rekonstruierten Prozesssignaldatensatzes (51, 5) durch einen Decoder (4) des Autoencoders (500) basierend auf der erzeugten Kodierung,
wobei der Encoder (2) und der Decoder (4) jeweils aus einem tiefen neuronalen Netz bestehen;
- Bestimmen (S50) eines Rekonstruktionsfehlers basierend auf dem zumindest einen Prozesssignaldatensatz (31) und dem zumindest einen rekonstruierten Prozesssignaldatensatz (51) umfassend das Ermitteln einer Abweichung des zumindest einen Prozesssignaldatensatzes (31) von dem zumindest einen rekonstruierten Prozesssignaldatensatz (51); und
- Detektieren (S60) einer Anomalie des Laserbearbeitungsprozesses basierend auf dem bestimmten Rekonstruktionsfehler.

2. Verfahren nach Anspruch 1, ferner umfassend: Messen (S10) von zumindest einem Teil der Prozesssignale des Prozesssignaldatensatzes (31), und/oder Übermitteln von zumindest einem Teil der Prozesssignale des Prozesssignaldatensatzes (31) von einer Steuerung (140).

3. Verfahren gemäß einem der vorstehenden Ansprüche, das Verfahren weiter umfassend die Schritte:
- Bestimmen (S70) eines Qualitätsmerkmals (x) des Laserbearbeitungsprozesses; und
- Bewerten (S80) des Qualitätsmerkmals (x) als valide, wenn im Schritt des Detektierens (S60) einer Anomalie des Laserbearbeitungsprozesses keine Anomalie detektiert wird; und
- Bewerten (S90) des bestimmten Qualitätsmerkmals (x) als nicht valide, wenn im Schritt des Detektierens (S60) einer Anomalie des Laserbearbeitungsprozesses eine Anomalie detektiert wird.

4. Verfahren nach Anspruch 3, wobei in dem Schritt des Bestimmens (S70) eines Qualitätsmerkmals (x) des Laserbearbeitungsprozesses durch einen Regressor (600), der durch ein neuronales Netz gebildet ist, ein Wert für das Qualitätsmerkmal (x) bestimmt wird, und/oder
wobei in dem Schritt des Bestimmens (S70) eines Qualitätsmerkmals (x) des Laserbearbeitungsprozesses durch einen Klassifikator (600), der durch ein neuronales Netz gebildet ist, ein Klassifizierungswert für das Qualitätsmerkmal (x) bestimmt wird.

5. Verfahren nach Anspruch 4, wobei der Autoencoder (400) und zumindest einer von dem Regressor (600) und dem Klassifikator (600) einen gemeinsamen Encoder (2) aufweisen, und/oder
wobei der Regressor (600) und/oder der Klassifikator (600) das Qualitätsmerkmal (x) basierend auf Daten von einem Encoder (2) des Autoencoders (400) bestimmt (S70).

6. Verfahren nach Anspruch 4, wobei der Autoencoder (400) und zumindest einer von dem Regressor (600) und dem Klassifikator (600) parallel zueinander sind, und/oder
wobei der Regressor (600) und/oder der Klassifikator (600) das Qualitätsmerkmal (x) basierend auf dem zumindest einen Prozesssignaldatensatz (31) bestimmt (S70), und/oder
wobei der Autoencoder (400) und zumindest einer von dem Regressor (600) und dem Klassifikator (600) eine gemeinsame Eingangsschicht (1) aufweisen.

7. Verfahren nach einem der Ansprüche 4 bis 6, wobei der Autoencoder (400) und zumindest einer von dem Regressor (600) und dem Klassifikator (600) mit den gleichen Daten angelernt sind.

8. Verfahren nach einem der vorstehenden Ansprüche, wobei der Schritt des Bestimmens (S50) eines Rekonstruktionsfehlers umfasst:
- Ermitteln einer gemittelten absoluten oder quadrierten Abweichung des zumindest einen Prozesssignaldatensatzes (31) von dem zumindest einen rekonstruierten Prozesssignaldatensatz (51); und/oder
- Ermitteln einer entlang der Zeitachse aufsummierten vorzeichenbehafteten, absoluten oder quadrierten Abweichung; und/oder
- Ermitteln der Mahalanobis-Distanz, insbesondere Ermitteln der Mahalanobis-Distanz bezüglich:
- der Abweichung des zumindest einen Prozesssignaldatensatzes (31) von dem zumindest einen rekonstruierten Prozesssignaldatensatz (51); und/oder
- einzelner Kennwerte zum Rekonstruktionsfehler; und/oder
- der Kodierung eines Prozesssignaldatensatzes (31).

9. Verfahren nach Anspruch 8, wobei das Verfahren umfasst:
- Ermitteln der Parameter Mittelwert-Vektor und Kovarianz-Matrix der Mahalanobis-Distanz mittels defektfreier oder gelabelter Datensätze.

10. Verfahren nach einem der vorstehenden Ansprüche, wobei der Rekonstruktionsfehler für einzelne Dimensionen separat und/oder basierend auf einer Metrik und/oder mittels Fast-Fourier-Transformation und/oder einer Wavelet-Transformation bestimmt wird (S50).

11. Verfahren nach einem der vorstehenden Ansprüche, wobei das Verfahren umfasst: Normalisieren des Rekonstruktionsfehlers in Bezug auf den Prozesssignaldatensatz (31) und/oder wobei der Schritt des Bestimmens (S50) eines Rekonstruktionsfehlers umfasst:
- Filtern von zumindest einem Teil des Prozesssignaldatensatzes (31) und/oder des rekonstruierten Prozesssignaldatensatzes (51); und
- darauf basierend Bestimmen des Rekonstruktionsfehlers.

12. Verfahren nach einem der vorstehenden Ansprüche, wobei das Verfahren umfasst:
- Bestimmen eines Abnormalitätsgrades, insbesondere Bestimmen eines Abnormalitätsgrades basierend auf einer gewichteten Summierung oder auf der Mahalanobis-Distanz bezogen auf einzelne Kennwerte zum Rekonstruktionsfehler,
wobei das Detektieren (S60) einer Anomalie des Laserbearbeitungsprozesses basierend auf dem bestimmten Abnormalitätsgrad erfolgt.

13. Laserbearbeitungsverfahren, umfassend die Schritte:
- Bearbeiten eines Werkstücks mittels eines Laserstrahls (10); und
- Überwachen des Laserbearbeitungsprozesses gemäß dem Verfahren nach einem der vorstehenden Ansprüche.

14. System (300) zum Überwachen eines Laserbearbeitungsprozesses, wobei das System (300) umfasst:
- mindestens eine Sensoreinheit (310), die dazu eingerichtet ist, Prozesssignale (11) des Laserbearbeitungsprozesses zu erfassen;
- mindestens einen Autoencoder (400), und
- mindestens eine Recheneinheit (320), die dazu eingerichtet ist, das Verfahren zum Überwachen des Laserbearbeitungsprozesses nach einem der Ansprüche 1 bis 13 auszuführen.

15. Laserbearbeitungssystem (100) zur Bearbeitung eines Werkstücks (18) mittels eines Bearbeitungslaserstrahls (10), wobei das Laserbearbeitungssystem (100) umfasst:
- einen Laserbearbeitungskopf (101) zum Einstrahlen des Bearbeitungslaserstrahls (10) auf das Werkstück (18); und
- ein System (300) gemäß Anspruch 14.

## Claims

1. A method for monitoring a laser machining process, said method comprising the steps of:
- inputting (S20) at least one process signal data set (31) of the laser machining process into an autoencoder (400);
- reconstructing the input process signal data set (31) by means of said autoencoder (400), comprising:
generating an encoding (3) by means of an encoder (2) of the autoencoder (500) based on the at least one process signal data set (31), wherein generating the encoding comprises a dimension reduction of the at least one process signal data set (31),
generating a reconstructed process signal data set (51, 5) by a decoder (4) of the autoencoder (500) based on the generated encoding,
wherein the encoder (2) and the decoder (4) consist of a deep neural network, respectively;
- determining (S50) a reconstruction error based on the at least one process signal data set (31) and the at least one reconstructed process signal data set (51) comprising determining a deviation of the at least one process signal data set (31) from the at least one reconstructed process signal data set (51); and
- detecting (S60) an anomaly of the laser machining process based on the determined reconstruction error.

2. The method according to claim 1, further comprising: measuring (S10) at least some of the process signals of the process signal data set (31), and/or transmitting at least some of the process signals of the process signal data set (31) from a control (140).

3. The method according to one of the preceding claims, said method further comprising the steps:
- determining (S70) a quality feature (x) of the laser machining process; and
- evaluating (S80) the quality feature (x) as valid when no anomaly is detected in the step of detecting (S60) an anomaly of the laser machining process; and
- evaluating (S90) the determined quality feature (x) as not valid when an anomaly of the laser machining process is detected in the step of detecting (S60) an anomaly.

4. The method according to claim 3, wherein, in the step of determining (S70) a quality feature (x) of the laser machining process by means of a regressor (600) formed by a neural network, a value for the quality feature (x) is determined, and/or
wherein, in the step of determining (S70) a quality feature (x) of the laser machining process by means of a classifier (600) formed by a neural network, a classification value for the quality feature (x) is determined.

5. The method according to claim 4, wherein said autoencoder (400) and at least one of said regressor (600) and said classifier (600) have a common encoder (2), and/or
wherein said regressor (600) and/or said classifier (600) determines (S70) the quality feature (x) based on data from an encoder (2) of said autoencoder (400).

6. The method according to claim 4, wherein said autoencoder (400) and at least one of said regressor (600) and said classifier (600) are parallel to each other, and/or
wherein said regressor (600) and/or said classifier (600) determines (S70) the quality feature (x) based on the at least one process signal data set (31), and/or
wherein said autoencoder (400) and at least one of said regressor (600) and said classifier (600) have a common input layer (1).

7. The method according to one of claims 4 to 6, wherein said autoencoder (400) and at least one of said regressor (600) and said classifier (600) are trained with the same data.

8. The method according to one of the preceding claims, wherein the step of determining (S50) a reconstruction error comprises:
- determining a mean absolute or squared deviation of the at least one process signal data set (31) from the at least one reconstructed process signal data set (51); and/or
- determining a signed, absolute or squared deviation summed up along the time axis; and/or
- determining the Mahalanobis distance, in particular determining the Mahalanobis distance with respect to:
- the deviation of the at least one process signal data set (31) from the at least one reconstructed process signal data set (51); and/or
- individual characteristic values of the reconstruction error; and/or
- the encoding of a process signal data set (31).

9. The method of claim 8, wherein said method comprises:
- determining the parameters mean vector and covariance matrix of the Mahalanobis distance using defect-free or labeled data sets.

10. The method according to one of the preceding claims, wherein the reconstruction error for individual dimensions is determined (S50) separately and/or based on a metric and/or by means of a fast Fourier transformation and/or a wavelet transformation.

11. The method according to one of the preceding claims, wherein said method comprises: normalizing the reconstruction error with respect to the process signal data set (31) and/or wherein the step of determining (S50) a reconstruction error comprises:
- filtering at least part of the process signal data set (31) and/or the reconstructed process signal data set (51); and
- based thereon, determining the reconstruction error.

12. The method according to one of the preceding claims, wherein said method comprises:
- determining a degree of abnormality, in particular determining a degree of abnormality based on a weighted summation or on the Mahalanobis distance with respect to individual characteristic values for the reconstruction error,
wherein detecting (S60) an anomaly of the laser machining process is based on the determined degree of abnormality.

13. A laser machining method, comprising the steps of:
- machining a workpiece by means of a laser beam (10); and
- monitoring the laser machining process according to the method according to one of the preceding claims.

14. A system (300) for monitoring a laser machining process, said system (300) comprising:
- at least one sensor assembly (310) configured to sense process signals (11) of the laser machining process;
- at least one autoencoder (400); and
- at least one processor (320) configured to carry out the method for monitoring the laser machining process according to one of claims 1 to 13.

15. A laser machining system (100) for machining a workpiece (18) by means of a machining laser beam (10), said laser machining system (100) comprising:
- a laser machining head (101) for radiating the machining laser beam (10) onto said workpiece (18); and
- a system (300) according to claim 14.

## Revendications

1. Procédé pour la surveillance d'un processus d'usinage au laser, le procédé comprenant les étapes :
- introduction (S20) d'au moins un ensemble (31) de données de signaux de processus du processus d'usinage au laser dans un auto-encodeur (400) ;
- reconstruction par l'auto-encodeur (400) de l'ensemble introduit (31) de données de signaux de processus, comprenant :
production d'un codage (3) par un encodeur (2) de l'auto-encodeur (400) sur la base dudit au moins un ensemble (31) de données de signaux de processus, la production du codage comprenant une réduction de dimension dudit au moins un ensemble (31) de données de signaux de processus,
production d'un ensemble reconstruit (51, 5) de données de signaux de processus par un décodeur (4) de l'auto-encodeur (400) sur la base du codage produit,
l'encodeur (2) et le décodeur (4) consistant chacun en un réseau neuronal profond ;
- détermination (S50) d'une erreur de reconstruction sur la base dudit au moins un ensemble (31) de données de signaux de processus et dudit au moins un ensemble reconstruit (51) de données de signaux de processus, comprenant la détection d'un écart dudit au moins un ensemble (31) de données de signaux de processus par rapport audit au moins un ensemble reconstruit (51) de données de signaux de processus ; et
- détection (S60) d'une anomalie du processus d'usinage au laser sur la base de l'erreur de reconstruction déterminée.

2. Procédé selon la revendication 1, comprenant en outre : mesure (S10) d'au moins une partie des signaux de processus de l'ensemble (31) de données de signaux de processus, et/ou transmission d'au moins une partie des signaux de processus de l'ensemble (31) de données de signaux de processus depuis une unité de commande (140).

3. Procédé selon l'une quelconque des revendications précédentes, le procédé comprenant en outre les étapes :
- détermination (S70) d'une caractéristique de qualité (x) du processus d'usinage au laser ; et
- évaluation (S80) comme valide de la caractéristique de qualité (x), lorsqu'aucune anomalie n'est détectée dans l'étape de la détection (S60) d'une anomalie du processus d'usinage au laser ; et
- évaluation (S90) comme non valide de la caractéristique de qualité (x) déterminée, lorsqu'une anomalie est détectée dans l'étape de la détection (S60) d'une anomalie du processus d'usinage au laser.

4. Procédé selon la revendication 3, dans lequel, dans l'étape de la détermination (S70) d'une caractéristique de qualité (x) du processus d'usinage au laser une valeur de la caractéristique de qualité (x) est déterminée par un régresseur (600) qui est constitué par un réseau neuronal, et/ou
dans lequel, dans l'étape de la détermination (S70) d'une caractéristique de qualité (x) du processus d'usinage au laser une valeur de classification de la caractéristique de qualité (x) est déterminée par un classificateur (600) qui est constitué par un réseau neuronal.

5. Procédé selon la revendication 4, dans lequel l'auto-encodeur (400) et au moins un parmi le régresseur (600) et le classificateur (600) comportent un encodeur (2) commun, et/ou
dans lequel le régresseur et/ou le classificateur (600) détermine(nt) (S70) la caractéristique de qualité (x) sur la base de données d'un encodeur (2) de l'auto-encodeur (400).

6. Procédé selon la revendication 4, dans lequel l'auto-encodeur (400) et au moins un parmi le régresseur (600) et le classificateur (600) sont parallèles l'un à l'autre, et/ou
dans lequel le régresseur (600) et/ou le classificateur (600) détermine(nt) (S70) la caractéristique de qualité (x) sur la base dudit au moins un ensemble (31) de données de signaux de processus, et/ou
dans lequel l'auto-encodeur (400) et au moins un parmi le régresseur (600) et le classificateur (600) présentent une couche d'entrée (1) commune.

7. Procédé selon l'une quelconque des revendications 4 à 6, dans lequel l'auto-encodeur (400) et au moins un parmi le régresseur (600) et le classificateur (600) sont entraînés avec les mêmes données.

8. Procédé selon l'une quelconque des revendications précédentes, dans lequel l'étape de la détermination (S50) d'une erreur de reconstruction comprend :
- la détermination d'un écart moyen quadratique ou absolu dudit au moins un ensemble (31) de données de signaux de processus par rapport audit au moins un ensemble reconstruit (51) de données de signaux de processus ; et/ou
- la détermination d'un écart quadratique ou absolu, muni de signe cumulé le long de l'axe du temps ; et/ou
- la détermination de la distance de Mahalanobis, en particulier de la distance de Mahalanobis en ce qui concerne :
- l'écart dudit au moins un ensemble (31) de données de signaux de processus par rapport audit au moins un ensemble reconstruit (51) de données de signaux de processus ; et/ou
- des valeurs caractéristiques individuelles relatives à l'erreur de reconstruction ; et/ou
- le codage d'un ensemble (31) de données de signaux de processus.

9. Procédé selon la revendication 8, le procédé comprenant :
- la détermination des paramètres vecteur de moyenne et matrice de covariance de la distance de Mahalanobis au moyen d'ensembles de données sans défaut ou étiquetés.

10. Procédé selon l'une quelconque des revendications précédentes, dans lequel l'erreur de reconstruction est déterminée (S50) pour des dimensions individuelles séparément et/ou sur la base d'une métrique et/ou au moyen de transformation rapide de Fourier et/ou d'une transformation en ondelettes.

11. Procédé selon l'une quelconque des revendications précédentes, dans lequel le procédé comprend : la normalisation de l'erreur de reconstruction eu égard à l'ensemble (31) de données de signaux de processus et/ou dans lequel l'étape de la détermination (S50) d'une erreur de reconstruction comprend :
- le filtrage d'au moins une partie de l'ensemble (31) de données de signaux de processus et/ou de l'ensemble reconstruit (51) de données de signaux de processus ; et
- sur la base de celui-ci la détermination de l'erreur de reconstruction.

12. Procédé selon l'une quelconque des revendications précédentes, le procédé comprenant :
- la détermination d'un degré d'anomalie, en particulier la détermination d'un degré d'anomalie sur la base d'une totalisation pondérée ou de la distance de Mahalanobis sur la base de valeurs caractéristiques individuelles relatives à l'erreur de reconstruction,
la détection (S60) d'une anomalie du processus d'usinage au laser s'effectuant sur la base du degré d'anomalie déterminé.

13. Procédé d'usinage au laser, comprenant les étapes :
- usinage au moyen d'un faisceau laser (10) d'une pièce à usiner ; et
- surveillance du processus d'usinage au laser conformément au procédé selon l'une quelconque des revendications précédentes.

14. Système (300) destiné à la surveillance d'un processus d'usinage au laser, le système (300) comprenant :
- au moins une unité de capteur (310) qui est conçue pour détecter des signaux (11) de processus du processus d'usinage au laser ;
- au moins un auto-encodeur (400), et
- au moins une unité de calcul (320) qui est conçue pour exécuter le procédé pour la surveillance du processus d'usinage au laser selon l'une quelconque des revendications 1 à 13.

15. Système d'usinage au laser (100) destiné à l'usinage au moyen d'un faisceau laser d'usinage (10) d'une pièce à usiner (18), le système d'usinage au laser (100) comprenant :
- une tête (101) d'usinage au laser destinée à la projection du faisceau laser d'usinage (10) sur la pièce à usiner (18) ; et
- un système (300) selon la revendication 14.
